# EUROPÄISCHE PATENTSCHRIFT

(11) **EP 1 849 260 B1**
(45) Veröffentlichungstag und Bekanntmachung des Hinweises auf die Patenterteilung: **08.07.2009**
(21) Anmeldenummer: 06705340.5
(22) Anmeldetag: 14.02.2006
(51) Int. Cl.: H04L 12/28

(54) **VERFAHREN UND SYSTEM ZUR DRAHTLOSEN UNTERTAGEDATENÜBERTRAGUNG ZWISCHEN WENIGSTENS EINER MOBILSTATION UND EINEM STATIONÄREN NETZWERK ÜBER EIN FUNKNETZWERK**
METHOD AND SYSTEM FOR SUBTERRANEAN WIRELESS DATA TRANSMISSION BETWEEN AT LEAST ONE MOBILE STATION AND A FIXED NETWORK BY MEANS OF A RADIO NETWORK
PROCEDE ET SYSTEME POUR LA TRANSMISSION SOUTERRAINE ET SANS FIL DE DONNEES ENTRE AU MOINS UNE STATION MOBILE ET UN RESEAU STATIONNAIRE PAR UN RESEAU HERTZIEN

(30) Priorität: 15.02.2005 DE 102005006987; 24.06.2005 DE 102005029749; 19.08.2005 DE 102005039575
(43) Veröffentlichungstag der Anmeldung: 31.10.2007
(73) Patentinhaber: Licania GmbH, 5036 Oberentfelden (CH)
(72) Erfinder: HUNZIKER, Christoph, CH-5036 Oberentfelden (CH)
(74) Vertreter: Liebetanz, Michael
(86) Internationale Anmeldenummer: PCT/CH2006/000099
(87) Internationale Veröffentlichungsnummer: WO 2006/086906

(56) Entgegenhaltungen:
- EP-A- 1 276 341
- WO-A-01/63825
- FR-A- 2 831 760
- US-A- 5 546 397

## Beschreibung

Die Erfindung betrifft ein Verfahren und ein System zur drahtlosen Untertagedatenübertragung zwischen wenigstens einer Mobilstation und einem stationären Netzwerk über ein Funknetzwerk, vorzugsweise über ein WLAN nach IEEE 802.11-Standard, insbesondere zur Überwachung und Steuerung von Untertage verfahrbaren Maschinen, wobei das stationäre Netzwerk eine Mehrzahl von vorzugsweise als Access-Points ausgebildete stationäre Basisstationen aufweist, wobei jede Basisstation über wenigstens eine vorzugsweise kabelgebundene Datenübertragungsverbindung mit dem stationären Netzwerk verbunden ist, wobei jede Basisstation und die Mobilstation jeweils wenigstens eine Sende- und Empfangseinrichtung aufweisen und wobei die Datenübertragung zwischen der Mobilstation und dem stationären Netzwerk in dem Funknetzwerk drahtlos über wenigstens eine Basisstation erfolgt.

Drahtlose, untertägige Kommunikation wird traditionell vorzugsweise mit UHF-Geräten durchgeführt, die innerhalb der Reichweite von stationären Antennen betrieben werden können. Diese sind entweder als Richtantennen oder als Schlitzkabelantennen, sogenannte Leaky Feeder, ausgeführt. Auch sind Systeme bekannt, welche mit digitalen Systemen im GHz-Bereich arbeiten, wie beispielsweise basierend auf der GSM-Technologie. Alle vorgenannten Systeme stellen Spezialentwicklungen dar und sind im Vergleich zu Standardverfahren der übertägigen Kommunikation vergleichsweise kostenintensiv. Deshalb haben in den letzten Jahren verstärkt Technologien Einzug gehalten, welche auf modernen Verfahren der drahtlosen Netzwerktechnik basieren. Hier kommen drahtlose lokale Funknetzwerke, sogenannte Wireless Local Area Networks (WLANs), zum Einsatz. Die Standardisierung dieser WLANs umfasst derzeit fünf WLAN-Standards, die in der Normenreihe IEEE 802.11 zusammengefasst sind. Darüber hinaus wird als neuer Standard (IEEE 802.16) für regionale Funknetze der sog. WiMAX-Standard diskutiert. Mit einer theoretischen Reichweite von bis zu 50 km und einer sehr hohen Datentransferrate übertrifft die WiMAX die derzeit aktuelle WLAN-Technik, die im Aussenbereich-Einsatz auf 3 bis 6 km Reichweite kommt.

Die Untertagedatenübertragung über ein drahtloses lokales Funknetzwerk weist eine Reihe von Nachteilen auf. So kann das Netzwerk zum einen nur in beschränktem Umfang exklusiv für kritische Anwendungen, wie beispielsweise zur Überwachung und Fernsteuerung von Maschinen, verwendet werden. Andere Geräte belegen einen Teil der zur Verfügung stehenden Bandbreite, die gegebenenfalls mit der kritischen Anwendung geteilt werden muss. Dies kann bei einer Maschinenfernsteuerung zu unkontrollierten Zuständen führen. Darüber hinaus ist bei einem Stromausfall im Bergwerk oder im Tunnel keine Kommunikation zwischen den Hardware-Komponenten des Funknetzwerkes mehr möglich, da für einen Betrieb des stationären Netzwerkes zumindest die stationären Komponenten mit elektrischer Energie versorgt werden müssen. Eine Unterbrechung der stromführenden Leitungsverbindungen zwischen Komponenten des stationären Netzwerkes kann dazu führen, dass ganze Bergwerksabschnitte von der drahtlosen Netzwerkkommunikation abgetrennt sind. Darüber hinaus ist es im Zusammenhang mit der Steuerung von Maschinen so, dass in Abhängigkeit von der aktuellen Betriebssituation im Tunnel bzw. der Anordnung von Fahrzeugen und Maschinen oder dergleichen, nicht zu jedem Zeitpunkt sichergestellt werden kann, dass eine HF-Verbindung zwischen der ferngesteuerten Maschine und dem stationären Netzwerk aufrecht erhalten werden kann. Ebenfalls ist bei Vorrichtungen des Standes der Technik ein schneller Wechsel von einem Access-Point zu einem nächsten Access-Point oftmals nicht möglich. Insbesondere bei mobilen Maschinen, welche auf eine ununterbrochene Netzwerkverbindung angewiesen sind, ist dies ein Nachteil. Gleiches gilt, wenn das Netzwerk, z.B. für Telefonieanwendungen mit sich bewegenden Personen eingesetzt wird. Zudem können während der Suche nach einem Access-Point keine Daten übertragen werden, was ebenfalls zu nachteiligen Verzögerungen führt.

Ein Verfahren nach dem Oberbegriff des Anspruchs 1 ist aus der US 5,546,397 AA bekannt. Ein Verfahren nach dem Oberbegrift des Anspruchs 1 ist aus der bekannt. Aufgabe der vorliegenden Erfindung ist es, ein Verfahren und ein System der oben genannten Art zur Verfügung zu stellen, mit denen es möglich ist, die generelle Kommunikation mit Mobilstationen an die spezielle untertägigen Anforderungen anzupasser und die Überwachung von Mobilstationen zu vereinfachen, um im Notfall Rettungsmassnahmen schnell une zielsicher einleiten zu können. Darüber hinaus ist es Aufgabe der Erfindung, den Untertagebetrieb von Maschinen zu jedem Zeitpunkt zu überwachen und die Fernsteuerung der Maschinen über das Funknetz bei möglichst hoher Verfügbarkeit des Funknetzes auch im Fall von Störzuständen sicherzustellen.

Zur Lösung der vorgenannten Aufgaben ist ein Verfahren mit den Merkmalen des Anspruchs 1 vorgesehen. Bei einer Ausführungsform des erfindungsgemässen Verfahrens der eingangs beschriebenen Art ist zudem vorgesehen, dass bei einer Unterbrechung der Datenübertragungsverbindung zwischen dem stationären Netzwerk und einer Basisstation und/oder bei Unterbrechung der Funkverbindung zwischen der Mobilstation und der Basisstation eine Datenübertragung zwischen der Mobilstation und dem stationären Netzwerk über die getrennte Basisstation und wenigstens eine weitere über eine nicht-unterbrochene Datenübertragungsverbindung mit dem stationären Netzwerk verbundenen Basisstation erfolgt. Im Ergebnis ermöglicht dies eine Datenübertragung auch bei einer Unterbrechung der Datenverbindung zwischen dem stationären Netzwerk und der mit der Mobilstation kommunizierenden Basisstation, wobei die an die getrennte Basisstation übertragenen Daten zunächst an eine weitere Basisstation übertragen werden, die über eine intakte Datenübertragungsverbindung mit dem stationären Netzwerk verfügt. Die Unterbrechung der Datenübertragungsverbindung zwischen dem stationären Netzwerk und der Basisstation kann beispielsweise die Folge eines Stromausfalls oder auch die Folge eines unterbrochenen Netzwerkkabels sein. Dabei können die Basisstationen im Betriebszustand sowohl kabelgebunden als auch drahtlos mit dem stationären Netzwerk verbunden sein. Durch das erfindungsgemäss vorgesehene Ausweichen auf eine weitere über eine intakte Datenübertragungsverbindung mit dem stationären Netzwerk verbundene Basisstation ist es auch im Fall eines Stromausfalls einer Basisstation oder einer Kabelunterbrechung möglich, Daten zwischen dem stationären Netzwerk und der Mobilstation über das Funknetzwerk zu übertragen.

Die Mobilstation kann dabei an und/oder auf einer Maschine angeordnet sein oder es kann sich um ein tragbares Mobilteil, insbesondere ein WLAN-taugliches IP-Telefon handeln. Im übrigen ist es so, dass das erfindungsgemässe Verfahren nicht nur zur Untertagedatenübertragung eingesetzt werden kann, sondern in jeder Umgebung, in welcher der Einsatz drahtloser lokaler Funknetzwerke zu vergleichbaren Problemen führt, beispielsweise in Gebäuden oder in Industrieanlagen.

Bei einer bevorzugten Ausführungsform des erfindungsgemässen Verfahrens erfolgt die Datenübertragung zwischen einer getrennten Basisstation und einer mit dem stationären Netzwerk verbundenen Basisstation drahtlos über das Funknetzwerk. Eine Basisstation, bei der es sich vorzugsweise um einen Access-Point nach einem IEEE 802.11-Standard handeln kann, weist grundsätzlich wenigstens eine Sende- und Empfangseinrichtung auf, die zur drahtlosen Datenübertragung ausgebildet ist. Darüber hinaus kann eine zweite Sende- und Empfangseinrichtung vorgesehen sein, welche einer anderen Abstrahlungsrichtung zugeordnet bzw. in Richtung auf eine Sende- und Empfangseinrichtung einer benachbarten Basisstation ausgerichtet sein kann. Beide Sende- und Empfangseinrichtungen sind vorzugsweise nicht einem bestimmten Einsatzzweck zugeordnet und befinden sich ständig in Bereitschaft. Vorzugsweise sind benachbarte Basisstationen in einem Abstand voneinander angeordnet, der den Aufbau einer (Richt-)Funkverbindung zwischen den Basisstationen ermöglicht. Dadurch ist es möglich, die zu übertragenden Daten bei Unterbrechung einer Datenübertragungsverbindung zwischen einer Basisstation und einem stationären Netzwerk an eine benachbarte Basisstation zu übertragen, die über eine intakte Datenübertragungsverbindung mit dem stationären Netzwerk verfügt.

Bei den Daten kann es sich beispielsweise um Daten zur Überwachung und/oder Steuerung einer Maschine handeln, an und/oder auf der die Mobilstation angeordnet ist. Werden im Fall einer Unterbrechung der Datenübertragungsverbindung Daten von einer Basisstation an eine benachbarte Basisstation übertragen, die bereits Daten an eine Mobilstation überträgt oder von dieser empfängt, kann es dazu kommen, dass sich der Datenverkehr, der im störungsfreien Betrieb über die Datenübertragungsverbindung zum stationären Netzwerk erfolgen würde, mit dem Datenverkehr zwischen der benachbarten Basisstation und einer mit dieser Basisstation kommunizierenden Mobilstation vermischt. In diesem Fall kann an die Mobilstation eine Information übertragen werden, die die Mobilstation darüber informiert, dass der normale Betriebszustand der Datenübertragung gestört ist, was beispielsweise auf einen Notfall schliessen lässt. Die Mobilstation kann in diesem Zusammenhang automatisch einen Betriebsmodus der überwachten oder gesteuerten Maschine ändern, um auf den Notfall entsprechend reagieren zu können. Beispielsweise kann von der Mobilstation automatisch bei einer zu befürchtenden Kollision des Datenverkehrs eine Steuerinformation an welche die Mobilstation aufweisende Maschine übertragen werden, was zu einer Verringerung der Fahrgeschwindigkeit der Maschine führen kann.

Die Basisstation kann eine zentrale Einheit darstellen, die wenigstens einen Access-Point, einen Switch, einen LWL-Medienkonverter und eine ggf. akkugepufferte Stromversorgung aufweisen kann sowie eine oder eine Mehrzahl von Antennen. Die Basisstation ist derart ausgebildet, dass eine Umsetzung der nachfolgend im einzelnen beschriebenen Merkmale des erfindungsgemässen Verfahrens möglich ist.

Benachbarte Basisstationen werden bei der vorgenannten Ausführungsform in einem Abstand zueinander angeordnet, der eine drahtlose Datenübertragung über Funk zwischen den benachbarten Basisstationen ermöglicht. In einer Tunnelinfrastruktur werden als Antennen vorzugsweise Richtantennen verwendet, welche eine möglichst grosse Reichweite innerhalb eines Tunnels ermöglichen. Weisen die Basisstationen zwei separate Sende- und Empfangseinheiten auf, ist es möglich, die Basisstationen als Bridge oder als Switch zu funktionalisieren. Während eine Bridge in einem Computernetzwerk zwei Segmente miteinander verbindet und das Netz in verschiedene Kollisionsdomänen aufteilt, ermöglicht ein Switch die Verbindung von mehr als zwei Netzwerk-Segmenten in einem lokalen Netzwerk (LAN). Die einzelnen Eingänge eines Switches können unabhängig voneinander Daten empfangen und senden. Sowohl eine Bridge als auch ein Switch lassen es zu, Daten, die auf der einen Seite der getrennten Basisstation empfangen werden, auf der anderen Seite weiterzuleiten. Dadurch ist es möglich, Daten, die auf eine getrennte Basisstation übertragen werden, über eine Mehrzahl weiterer (getrennter) Basisstationen in der Art einer Sprungfunktion über das Funknetzwerk weiterzuleiten. Das sprungartige Weiterleiten erfolgt vorzugsweise solange, bis die Daten auf eine Basisstation übertragen werden, die eine intakte Verbindung zum stationären Netzwerk aufweist.

Das Weiterleiten der Daten kann mit Hilfe standardisierter Verfahren, beispielsweise in einem redundanten ringförmigen Netzwerk mit dem sog. Spanning Tree Algorithm nach IEEE 802.1D, erfolgen oder entsprechend der nachfolgend beschriebenen auf Anwendungsebene implementierten Abläufe.

Um die Dauer der Datenübertragung zu verringern und eine möglichst effiziente Route für die zu übertragenden Datenpakete auszuwählen, ist es vorzugsweise vorgesehen, dass von einer getrennten Basisstation eine Statusanfrage an wenigstens eine weitere, vorzugsweise alle, drahtlos oder drahtgebunden mit der getrennten anfragenden Basisstation verbundenen weiteren Basisstationen übertragen wird, wobei die Statusanfrage den Verbindungszustand der weiteren angefragten Basisstationen betrifft. Dies erfordert eine entsprechende programmtechnische Ausbildung der Basisstationen. Im Ergebnis wird von einer getrennten Basisstation an vorzugsweise alle erreichbaren benachbarten Basisstationen eine Anfrage übertragen, um eine Information darüber zu erhalten, ob die jeweils benachbarte Basisstation über eine intakte Datenübertragungsverbindung mit dem stationären Netzwerk verfügt.

Nach der Übertragung der Statusanfrage kann die Statusanfrage in der Art einer Informationskette fortlaufend von der angefragten Basisstation an weitere Basisstationen übertragen werden. Wird eine von einer getrennten Basisstation gestellte Suchanfrage auf dieselbe Basisstation zurück übertragen, führt dies vorzugsweise nicht zur Weiterleitung der Statusanfrage. Es ist erfindungsgemäss jedoch vorgesehen, dass die Rückübertragung einer Statusanfrage als Information darüber gewertet wird, dass die die Statusanfrage rückmeldende Basisstation ebenfalls von dem stationären Netzwerk getrennt ist.

Grundsätzlich ist es auch möglich, dass nach der Übertragung der Statusanfrage von der angefragten Basisstation eine Statusinformation erstellt und an die anfragende Basisstation übertragen wird. Auf eine gestellte Statusanfrage kann somit zurückgemeldet werden, dass die angefragte Basisstation entweder eine unterbrochene oder eine nicht-unterbrochene Datenübertragungsverbindung zum stationären Netzwerk aufweist.

Die Übertragung der Statusanfrage wird vorzugsweise so lange fortgesetzt, bis die Statusanfrage an eine Basisstation übertragen wird, die eine intakte Verbindung zum stationären Netzwerk aufweist. Diese Basisstation meldet den verfügbaren Netzwerkkontakt an die anfragende Basisstation zurück, wobei vorzugsweise wiederum in der Art einer Informationskette die Statusinformation derart rückgemeldet wird, dass alle getrennten Basisstationen eine Information über die mit dem stationären Netzwerk verbundene Basisstation erhalten haben. Damit ist sichergestellt, dass jede vom stationären Netzwerk getrennte Basisstation zumindest über einen möglichen Datenübertragungsweg informiert wird, um Daten zwischen dem stationären Netzwerk und der Mobilstation zu übertragen.

Bei Erkennung eines Fehlerzustandes bzw. einer unterbrochenen Datenübertragungsverbindung kann von der ersten mit dem stationären Netzwerk verbundenen Basisstation eine Meldung des Fehlerzustandes an einen zentralen Server übertragen werden, wobei die Meldung Informationen über die vom Netzwerk getrennte Basisstation enthalten kann. Dadurch ist es möglich, eine unterbrochene Datenübertragungsverbindung schnell und einfach im Netzwerk aufzufinden und gezielt Instandsetzen zu können. Ebensogut ist es möglich, dass über einen zentralen Server in regelmässigen Abständen die Erreichbarkeit der untertägigen Basisstationen bzw. Netzwerkknoten abgefragt wird, um die Funktionsfähigkeit des Gesamtnetzes zu kontrollieren.

Aus der Anzahl der Übertragungsschritte bzw. der Datensprünge in einer Informationskette kann der Abstand zwischen einer verbundenen Basisstation und einer Mehrzahl getrennter Basisstationen ermittelt werden, um eine möglichst kurze Verbindung auszuwählen und die Datenübertragung zwischen dem stationären Netzwerk und der Mobilstation auf möglichst kurzem Wege bzw. bei möglichst geringen Datenübertragungszeiten sicherzustellen.

Bei einer alternativen vorteilhaften Ausführungsform ist es vorgesehen, dass wenigstens zwei, vorzugsweise alle Basisstationen, über eine vorzugsweise mit dem stationären Netzwerk verbundene Datenübertragungsleitung miteinander verbunden werden, insbesondere ringförmig, und dass bei einer Unterbrechung der Datenübertragungsverbindung zwischen dem stationären Netzwerk und einer Basisstation eine Datenübertragung zwischen der von dem stationären Netzwerk getrennten Basisstation und wenigstens einer weiteren über eine nicht-unterbrochene Datenübertragungsverbindung mit dem stationären Netzwerk verbundenen Basisstation über die Datenübertragungsleitung kabelgebunden erfolgt. Der Erfindung liegt an dieser Stelle der Grundgedanke zugrunde, die Basisstationen vorzugsweise ringförmig oder in vermaschten Netzen durch festinstallierte Leitungen zu verbinden, wobei diese Verbindungen weiter vorzugsweise über eine wesentlich höhere Bandbreite verfügen als eine Funkverbindung. Kommt es zu einer Leitungsunterbrechung zwischen einer Basisstation und dem stationären Netzwerk, erfolgt die Übertragung der Daten über die Datenübertragungsleitung bis zu einer weiteren Basisstation, die mit dem stationären Netzwerk über eine intakte Datenübertragungsleitung verbunden ist. Möglich ist, dass eine Datenübertragungsleitung ringförmig von Basisstation zu Basisstation weiter verbunden wird und dadurch über wenigstens eine Basisstation ein alternativer Zugang zum Festnetz bereitgestellt wird. Um eine ringförmige Verbindung der Basisstationen zu ermöglichen, weist jede Basisstation wenigstens zwei Anschlüsse für ein Netzwerkkabel, vorzugsweise ein Kupfer- oder LWL-Netzwerkkabel, auf. Eine Datenübertragung zwischen zwei über das Netzwerkkabel verbundenen Basisstationen kann vorzugsweise im Vollduplexbetrieb erfolgen, wobei die Funktionalität der Basisstationen durch die Datenübertragung nicht beeinträchtigt werden soll.

Um für einen vorgegebenen Zeitraum einen Weiterbetrieb der Basisstationen auch dann zu ermöglichen, wenn die üblicherweise über das stationäre Netzwerk erfolgende Stromversorgung einer Basisstation unterbrochen wird, ist es bei einer weiteren alternativen Ausführungsform des erfindungsgemässen Verfahrens der eingangs beschriebenen Art vorgesehen, dass bei einer Unterbrechung der im störfreien Betrieb über das stationäre Netzwerk oder ein separates Stromversorgungsnetz vorgesehenen Stromversorgung der Basisstation eine netzunabhängige Stromversorgung erfolgt. Jede Basisstation ist dazu vorzugsweise an eine netzunabhängige Stromversorgungseinrichtung angeschlossen, wobei die Basisstation einen elektrischen Energiespeicher, beispielsweise eine Batterie, aufweisen kann. Der Energiespeicher stellt für einen längeren Zeitraum einen Weiterbetrieb der Basisstation sicher, so dass weiterhin die Datenübertragung zwischen dem stationären Netzwerk und der Mobilstation über die Basisstation erfolgen kann. Darüber hinaus ist es auch möglich, unmittelbar nach der Unterbrechung der Stromversorgung einer Basisstation, insbesondere nach der Aufnahme eines Notstrombetriebes, eine Statusanfrage der vorbeschriebenen Art an benachbarte Basisstationen zu übertragen, um eine Information über den Verbindungszustand benachbarter Basisstationen zu dem stationären Netzwerk zu erhalten. Bei Stromausfall ist es aufgrund der Notstromversorgung der Basisstationen darüber hinaus möglich, über eine ringförmige die Basisstationen direkt miteinander verbindende Datenübertragungsleitung der zuvor beschriebenen Art einen alternativen Zugang zu dem stationären Netzwerk aufzufinden, um die Datenübertragung zwischen dem stationären Netzwerk und der Mobilstation zu ermöglichen.

Bei einer weiteren alternativen Ausführungsform des erfindungsgemässen Verfahrens ist es vorgesehen, dass unmittelbar nach einer Unterbrechung der Stromversorgung einer Basisstation Identifikationsdaten und/oder Positionsdaten wenigstens einer sich vor und/oder nach der Unterbrechung der Stromversorgung innerhalb der Funkreichweite der Basisstation befindlichen Mobilstation, vorzugsweise aller innerhalb der Funkreichweite angeordneten Mobilstationen, ermittelt und von der Basisstation an das stationäre Netzwerk, vorzugsweise an einen Zentralrechner des stationären Netzwerkes, übertragen werden. Zusätzlich zu einer Statutsanfrage der zuvor beschriebenen Art und/oder alternativ dazu kann es erfindungsgemäss vorgesehen sein, dass alle Basisstationen nach einem Stromausfall, der möglicherweise auf ein Grubenunglück zurückzuführen ist, unmittelbar Identifikationsdaten aller Mobilstationen an das stationäre Netzwerk übertragen, welche sich zum Zeitpunkt des Stromausfall in der Funkreichweite der betroffenen Basisstationen befunden haben und/oder in Funkverbindung mit den betroffenen Basisstationen gestanden haben. Wird die Übertragung von Identifikationsdaten und/oder Positionsdaten von allen Basisstationen ausgeführt, die dem stationären Netzwerk zugeordnet sind, kann ein umfassender Überblick über den Standort aller Mobilstationen zum Zeitpunkt des Stromausfalls erhalten werden. Für den Fall, dass ein Stromausfall auf ein Unglück zurückzuführen ist, kann durch die Erfindung die Position aller mit einer Mobilstation ausgerüsteten Bergleute bestimmt und an die Grubenwehr übermittelt werden. Diese kann dann unmittelbar gezielte Rettungsaktionen einleiten, wobei die Position der Bergleute gegebenenfalls bis auf wenige Meter genau bestimmt werden kann. Eine Erweiterung dieser Funktion liegt darin, daß eine Basisstation bestimmte Geräte oder Gerätegruppen programmgesteuert überwacht: Nach Ablauf einer bestimmten Zeit, in der sich ein Mobilgerät nicht bewegt hat wird entweder direkt ein Alarm in der Zentrale ausgelöst oder zunächst das Mobilgerät alarmiert. Wird auf diesen Alarm hin von der zugehörigen Person kein Quittungsknopf gedrückt, so löst die Basisstation einen Zentralalarm aus.

Nach der Übertragung der Identifikationsdaten und/oder Positionsdaten kann in einem Notfallmodus der Basisstation die weitere Datenübertragung lediglich eingeschränkt zugelassen werden. Die Basisstationen ermöglichen dann wieder einen eingeschränkten Netzwerkverkehr, welcher sich zum Beispiel auf das Übermitteln von Textmitteilungen oder gegebenenfalls auch auf das Führen von Telefonaten beschränken kann. Dadurch wird sichergestellt, dass es im Notfall nicht zu einer Überlastung des Netzes mit nachteiligen Auswirkungen auf die Positionsdatenübermittlung kommen kann.

In dem Notfallmodus wird vorzugsweise die Position aller personengebundenen Geräte zyklisch ermittelt und an einen zentralen Rechner des stationären Netzwerkes, vorzugsweise an eine Zentralstation, weitergegeben. In diesem Zusammenhang ist es weiter vorzugsweise vorgesehen, dass ein Zugriff auf die Identifikationsdaten und/oder Positionsdaten nur in einem Notfall und/oder nach Autorisierung erfolgen kann. Hierdurch wird sichergestellt, dass es nicht zu einem Missbrauch der gespeicherten Daten kommt.

Zudem ist es möglich, das Identifikationsdaten und/oder Positionsdaten über einen festgelegten Zeitraum gespeichert und kontinuierlich oder lediglich nach einer Unterbrechung der Stromversorgung bzw. in einem Notfall übertragen werden. Im Ergebnis kann die Grubenwehr vorzugsweise nur im Unglücksfall auf die gespeicherten Daten zugreifen, um eine Übersicht über Personenstandorte zu erhalten. Der Zugriff auf personenbezogene Daten wird weiter vorzugsweise zeitlich begrenzt, um dem Datenschutzverlangen der Bergleute nachzukommen.

Die Mobilstation kann grundsätzlich auch an und/oder auf einer Maschine angeordnet sein, wobei die Maschine im Untertageeinsatz beispielsweise in einem Tunnel verfahrbar ist. In diesem Fall ist es üblicherweise vorgesehen, dass in kurzen Zeitabständen die Mobilstation der Maschine mit verschiedenen Basisstationen eine Kommunikationsverbindung eingeht bzw. sich mit diesen assoziiert. Durch das kanalgebundene Übertragungsverfahren in einem WLAN-Funknetz nach IEEE 802.11 kann es jedoch bei beweglichen Maschinen zu Signalauslöschungen und damit zu einer schwankenden Kommunikationsqualität kommen. Dies hat zur Folge, dass eine Überwachung und Steuerung der sich bewegenden Maschinen nur eingeschränkt möglich ist.

Aus dem Stand der Technik sind Verfahren bekannt, wobei zur Sicherstellung einer möglichst gleichbleibenden Kommunikationsqualität zwischen einem Mobilteil und einem stationären Netzwerk zwei Antennen eingesetzt werden, was als "Antenna Diversity" bezeichnet wird. Dennoch ergeben sich im Berg- und Tunnelbau viele Betriebszustände, bei denen eine Kommunikation zeitweise unmöglich wird. Dies kann zum einen durch Fahrzeuge veranlasst werden, die zwischen der Maschine und einer Basisstation angeordnet sind oder durch Geräte, die ggf. durch ihre eigene Größe sich auch selbst zeitweise einen Funkkontakt blockieren.

In vielen Fällen muss eine ferngesteuerte Maschine angehalten werden, wenn sie keine Funkverbindung mehr zur Leitzentrale hat. Das erneute Starten der Maschine ist nach einer Unterbrechung der Funkverbindung zum Teil nicht mehr möglich.

Um Untertage verfahrbare Maschinen mit höherer Sicherheit und Zuverlässigkeit überwachen und steuern zu können, ist es bei einer alternativen Ausführungsform des eingangs beschriebenen Verfahrens vorgesehen, dass wenigstens zwei Mobilstationen an und/oder auf einer Untertage verfahrbaren Maschine angeordnet werden und dass bedarfsweise eine Datenübertragung zwischen der einen Mobilstation und/oder der anderen Mobilstation und der Basisstation erfolgt. Erfindungsgemäss verfügt eine Maschine in diesem Fall über zwei unabhängige Sende- und Empfangseinrichtungen. Diese können in einem Gerät vereinigt sein oder als zwei separate Geräte an und/oder auf der Maschine montiert sein. Eine Mobilstation mit einer Sende- und Empfangseinrichtung weist vorzugsweise zwei Antennen auf, weiter vorzugsweise Richtantennen, wobei zumindest eine Antenne in Fahrtrichtung und zumindest eine weitere Antenne entgegen der Fahrtrichtung der Maschine angeordnet werden kann. Dadurch wird der Aufbau und der Erhalt einer Funkverbindung zwischen der Mobilstation an und/oder auf der Maschine und einer dem stationären Netzwerk zugeordneten Basisstation erleichtert. Zur Vernetzung einer Mehrzahl von Mobilstationen bzw. einer Mehrzahl von Sende- und Empfangseinrichtungen an und/oder auf der Maschine kann eine Bridging-Funktion vorgesehen sein, welche die Verbindung in verschiedene Segmente und somit in Kollisionsdomänen unterteilt. Wenn die Mobilstationen derart ausgebildet sind, dass eine Datenübertragung zwischen der Maschine und dem stationären Netzwerk über zwei unabhängige Funkverbindungen möglich ist, dann beinhaltet das auch das Vorsehen von mehreren Transceivern oder das Nutzen von verschiedenen Frequenzbändern durch ein entsprechend integriertes Gerät.

Um eine voneinander unabhängige Datenübertragung zwischen den an und/oder auf einer Maschine angeordneten Mobilstationen und wenigstens einer Basisstation des stationären Netzwerkes zu ermöglichen, können die Mobilstationen derart ausgebildet und/oder zueinander angeordnet werden, dass eine Datenübertragung zwischen der Maschine und dem stationären Netzwerk über wenigstens zwei unterschiedliche Kanäle möglich ist. Um eine Phasenverschiebung zwischen zwei Kanälen der Funkverbindung vorzugeben, kann vorgesehen sein, eine bestimmte Antennenform oder einen bestimmten Antennentyp sowie verschiedene Polarisationsebenen des HF-Signals auszuwählen oder die Mobilstationen der Maschine entsprechend beabstandet anzuordnen.

Vorzugsweise werden die zu übertragenden Daten grundsätzlich oder situationsabhängig temporär redundant von den Mobilstationen der Maschine übertragen, wobei vorzugsweise lediglich die zuerst an eine Basisstation übertragenen und beim Empfänger eingehenden Daten berücksichtigt werden. Zur Trennung verschiedener Funktionen innerhalb des multifunktionalen drahtlosen Netzwerkes kann es vorgesehen sein, dass die Funkverbindung zwischen einer Mobilstation und einer Basisstation als virtuelles privates Datennetz (VPN) bzw. als sogenanntes Virtual Lan (VLAN) ausgebildet ist. Ein virtuelles privates Netz ist ein Computernetz, das zum Transport privater Daten ein öffentliches Netz nutzt. Teilnehmer eines virtuellen privaten Netzes können Daten wie in einem internen LAN austauschen. Die einzelnen Teilnehmer selbst müssen hierzu nicht direkt verbunden sein. Durch das virtuelle private Netz können die Mobilstationen Zugriff auf das stationäre Netzwerk erhalten, und zwar über die Basisstationen, die dem stationären Netzwerk zugeordnet sind. Ein VLAN ist ein virtuelles lokales Netzwerk innerhalb eines physikalischen Netzwerkes, mit dessen Hilfe virtuelle Netzwerke bezüglich Sicherheit, Broadcastkontrolle, o.ä, voneinander getrennt werden können. VLANs könne über Router miteinander verbunden werden. Eine weit verbreitete technische Realisierung von VLANs ist teilweise im Standard IEEE 802.1q definiert.

Eine weitere bevorzugte Ausführungsform des erfindungsgemässen Verfahrens sieht vor, dass die Signalqualität der zwischen der Mobilstation und einer Basisstation übertragenen Daten ermittelt wird, beispielsweise durch eine Feldstärkemessung. Dabei ist es vorzugsweise vorgesehen, dass die Signalqualität der von der Mobilstation an eine Basisstation übertragenen Daten ermittelt wird. Weist eine unter Tage verfahrbare Maschine wenigstens zwei voneinander beanstandete Mobilstationen auf, ist es erfindungsgemäss vorgesehen, dass die Signalqualitäten für beide Mobilstationen ermittelt werden. Die ermittelten Signalqualitäten können dann an die die Daten absendende Station übertragen werden, vorzugsweise von jeder datenempfangenden Station. Im Ergebnis wird die Signalqualität der eingehenden Daten und die Signalqualität der ausgesendeten und beim Empfänger eingegangenen eigenen Daten ermittelt und dem Absender mitgeteilt. Dadurch ist es möglich, in Abhängigkeit von der Verbindungsqualität eine Entscheidung darüber zu treffen, mit welcher Basisstation eine Mobilstation eine Funkverbindung aufbauen bzw. mit welcher Basisstation sich die Mobilstation assoziieren soll und wann ggf. ein Umschalten auf eine andere Basisstation, ein sog. Roaming, durchgeführt wird.

Erfindungsgemäss erhält die Maschine vorzugsweise kontinuierlich Informationen über die Signalqualität der von der Maschine an jede der Basisstationen übertragenen Datensignale, wobei Signalqualitäten kontinuierlich ermittelt und übertragen werden. Um eine möglichst hohe Qualität der Funkverbindung zwischen einer Mobilstation und einer Basisstation sicherzustellen, ist es weiter vorzugsweise vorgesehen, dass die Signalqualität jeder in Funkverbindung mit der Mobilstation bzw. der Basisstation stehenden Basisstation bzw. Mobilstation ermittelt wird. Im Ergebnis bedeutet dies, dass für jede Mobilstation die Verbindungsqualität jeder möglichen Funkverbindung mit einer in Funkreichweite angeordneten Basisstation ermittelt und als Grundlage für die Assoziierung der Mobilstation mit einer ausgewählten Basisstation herangezogen wird. Wird sowohl die Signalqualität der von der Mobilstation an die Basisstation übertragenen Daten als auch die Signalqualität der von der Basisstation an die Mobilstation übertragenen Daten ermittelt und der Maschine mitgeteilt, verfügt die Maschine über Informationen über die Verbindungsqualität sowohl der von der Maschine gesendeten als auch der von der Maschine empfangenen Datensignale, und zwar für jede Basisstation, mit der sie assoziiert ist. In Abhängigkeit von der Signalqualität der Funkverbindungen zwischen den an und/oder auf der Maschine angeordneten Mobilstationen und wenigstens einer Basisstation kann eine Entscheidung darüber getroffen werden, über welche Mobilstation die Datenübertragung zwischen der Basisstation und der Maschine erfolgen soll.

Vorzugsweise wird diese Entscheidung über eine Steuereinrichtung der Maschine selbst getroffen, wobei es grundsätzlich natürlich auch möglich ist, dass ausgehend von der Zentralstation, bei der es sich beispielsweise um einen Leitstand über Tage handeln kann, oder von einer Basisstation die Funkverbindung mit der höchsten Signalqualität zur Datenübertragung ausgewählt wird. Die Signalqualität kann weiteren Basisstationen mitgeteilt werden, die innerhalb der Funkreichweite der an und/oder auf der Maschine angeordneten Mobilstationen angeordnet sind. In diesem Fall wird von der Mobilstation eine Anfrage an die innerhalb der Funkreichweite angeordneten Basisstationen übertragen, um nach einer entsprechenden Antwort in Abhängigkeit von der Signalqualität mit einer bestimmten Basisstation eine Funkverbindung einzugehen. Auf Anwendungsebene wird somit entschieden, welche Verbindung optimal genutzt werden kann.

Da die Maschine stets über zwei unabhängige Funkverbindungen mit einer Basisstation verfügen kann, ist es möglich, die aktuelle Datenübertragung im wesentlichen verzögerungsfrei in Abhängigkeit von der Signalqualität über die eine Funkverbindung und/oder die andere Funkverbindung vorzunehmen. Die bei einem physikalischen Wechsel bei einer laufenden Datenverbindung von einer Basisstation auf eine andere Basisstation üblicherweise auftretende Unterbrechung der Datenverbindung kann somit erfindungsgemäss vermieden werden. Der jeweils beste Weg für die Übertragung der Datenpakete von der einer oder weiteren Mobilstation der Maschine zu der Basisstation wird von einer entsprechend ausgebildeten Steuerungseinheit der Maschine selbst ausgewählt, um in Abhängigkeit von der Verbindungsqualität die Übertragung der Datenpakete bei möglichst geringer Störanfälligkeit sicherzustellen. Darüber hinaus kann vorgesehen sein, dass ein mit dem stationären Netzwerk verbundener Leitstand von der Maschinensteuerung darüber informiert wird, welche der an und/oder auf der Maschine angeordneten Mobilstationen zum Datenaustausch mit der Basisstation vorgesehen ist.

Bei einer Basisstation handelt es sich gemäss der Erfindung vorzugsweise um einen drahtlosen Zugangspunkt, einen sogenannten Wireless Access-Point, als Teil der Topologie des stationären Netzwerkes. Ein Access-Point ist eine aktive Netzwerkkomponente. Im Gegensatz zu passiven Netzkomponenten wie etwa Kabeln ist ein Access-Point in der Lage, Netzwerkdaten eigenständig zu verarbeiten. Ist die Untertagedatenübertragung zwischen einer Mobilstation und dem stationären Netzwerk über ein WLAN nach dem IEEE-Standard 802.11 vorgesehen, so können erfindungsgemäss sowohl die Basisstationen als auch die an und/oder auf einer Maschine angeordneten Mobilstationen als 802.11 Access-Points ausgebildet sein. Erfindungsgemäss wird somit auch auf einer Untertage verfahrbaren Maschine eine access-point-fähige Hardware eingesetzt. Da diese in der Lage ist, Verbindungen zu mehreren Fremdstationen aufrecht zu erhalten, kann ein explizites zeitaufwendiges Assoziieren einer mobilen Basisstation mit bestimmten Access-Points des stationären Netzwerkes vermieden werden.

In diesem Zusammenhang können ein oder mehrere Access-Points auf der Maschine eingesetzt werden, so dass gegebenenfalls mehrere simultane Verbindungen zu dem stationären Netzwerk bestehen können. Über diese Basisverbindungen können auch die Nutzdaten zwischen der Maschine und dem stationären Netzwerk ausgetauscht werden. Bei den Nutzdaten kann es sich beispielsweise um Überwachungs- und/oder Steuerungsdaten handeln. Sowohl die an der Datenübertragung beteiligten stationären Access-Points des stationären Netzwerkes als auch die an und/oder auf der Maschine vorgesehenen mobilen Access-Points können zur selbständigen Entscheidung, gegebenenfalls im Dialog miteinander, ausgebildet sein, über welche Verbindung eine Datenübertragung erfolgen soll. Dabei kann eine entsprechende Software vorgesehen sein, die sicherstellt, dass mehrfach übertragene Daten nicht mehrfach weitergesendet oder verarbeitet werden können.

Die Störanfälligkeit der drahtlosen Übertragung von einer Mobilstation auf einen Access-Point des stationären Netzwerkes kann dadurch vermindert werden, dass für den Untertageeinsatz die Untertagedatenübertragung über ein WLAN nach IEEE 802.11 a- oder g-Standard erfolgt. Dies hat den Vorteil, dass die Informationen über Unterfrequenzen des genutzten Frequenzbandes mehrfach übertragen werden können, wodurch die Störanfälligkeit gegenüber einem WLAN nach 802.11 b-Standard wesentlich verbessert wird, da für die Datenübertragung über ein WLAN nach IEEE 802.11 b-Standard das gesamte Frequenzband eines Kanals gleichförmig genutzt wird.

Um eine zentrale Steuerung und Überwachung einer unter Tage verfahrbaren Maschine zu ermöglichen, ist es bei einer weiteren alternativen Ausführungsform vorgesehen, dass die Mobilstation an und/oder auf einer unter Tage verfahrbaren Maschine angeordnet wird, dass von einer Basisstation die Position der Maschine auf der Grundlage der von der Mobilstation an die Basisstation übertragenen Daten vorzugsweise kontinuierlich ermittelt wird und dass von der Basisstation wenigstens ein die Position der Maschine kennzeichnendes Positionssignal an wenigstens eine in Fahrtrichtung der Maschine benachbarte Basisstation übertragen wird. Erfindungsgemäss ist es möglich, dass von den als Access-Points ausgebildeten Basisstationen die Position einer unter Tage verfahrbaren Maschine vorzugsweise kontinuierlich verfolgt wird. Dabei ist es vorzugsweise vorgesehen, dass die Position einer mit der Basisstation bzw. einem Access-Point über eine Funkverbindung verbundenen Mobilstation und/oder die Position aller in Funkreichweite der Basisstation angeordneten Mobilstationen ermittelt wird. Die Positionsbestimmung der Maschine kann beispielsweise darüber erfolgen, dass Positionsdaten von der Mobilstation an eine assoziierte Basisstation übertragen werden. Grundsätzlich ist es natürlich auch möglich, dass der Aufbau einer Funkverbindung zwischen einer an und/oder auf der Maschine angeordneten Mobilstation und einer Basisstation bereits als Information gewertet wird, dass sich eine Maschine innerhalb der Funkreichweite der Basisstation und damit in der Nähe befindet.

Erfindungsgemäss ist es somit möglich, dass die Basisstationen den Fahrweg einer Maschine verfolgen, wobei eine Basisstation die unmittelbar benachbarten Basisstationen entweder über das Funknetzwerk oder über das stationäre Netzwerk darüber informiert, dass sich eine Maschine nähert. Um in Abhängigkeit von der situationsabhängigen Kommunikationsanforderung der Maschine eine ausreichend grosse Bandbreite der Funkverbindung für die Datenübertragung von der Maschine auf die Basisstation bereitzustellen, ist es vorzugsweise vorgesehen, dass mit dem Aufbau der Funkverbindung oder auch kontinuierlich während einer bestehenden Verbindung im laufenden Betrieb der Maschine zwischen der Mobilstation und einer Basisstation wenigstens eine Information über die Bandbreitenanforderung der Maschine an die Basisstation übertragen wird. Der Bandbreitenbedarf ändert sich beispielsweise dann, wenn ein Bediener die Maschine manuell zur Fernsteuerung übernimmt. Unter einer Bandbreitenanforderung ist die Datenmenge zu verstehen, die im Zusammenhang mit der Überwachung und/oder der Steuerung der Maschine von der Mobilstation an die Basisstation und umgekehrt übertragen werden muss.

Die Bandbreitenanforderung kann von der mit der Mobilstation assoziierten Basisstation an benachbarte Basisstationen übertragen werden, was dazu führt, dass von der benachbarten Basisstation automatisch eine Bandbreitenreservierung in der Höhe der Bandbreitenanforderung der Maschine vorgenommen werden kann. Dies kann beispielsweise darüber erfolgen, dass mit der Übertragung der Bandbreitenanforderung keine weiteren Verbindungen zwischen einer benachbarten Basisstation und weiteren Mobilstationen, beispielsweise PDA's oder Telefonen, aufgebaut werden können. Sobald eine Maschine den Funkbereich einer Basisstation wieder verlässt, wobei die HF-Funkverbindung zwischen der Basisstation und der Mobilstation der Maschine unterbrochen wird, kann die Basisstation wieder in den Normalbetrieb überführt werden. Die Bandbreitenreservierung wird dann aufgehoben. Die situationsabhängige Bandbreitenreservierung ist insbesondere dann von Vorteil, falls eine Untertage verfahrbare Maschine manuell ausgehend von der stationären Zentralstation bzw. einem Leitstand bedient und gleichzeitig beispielsweise per digitalem Video über ein WLAN überwacht werden soll.

Um zur Steuerung und zur Überwachung einer Untertage verfahrbaren Maschine zu jeder Zeit eine ausreichend grosse Bandbreite der Datenübertragungsverbindung zwischen einer an und/oder auf der Maschine angeordneten Mobilstation und einer Basisstation bereit zu stellen, ist es bei einer weiteren alternativen Ausführungsform des eingangs beschriebenen erfindungsgemässen Verfahrens vorgesehen, dass eine Priorisierung der Dienstgüte des Funknetzes vorgesehen wird, wobei die von einer Mobilstation an eine Basisstation übertragenen Datenpakete eine höhere Priorität erhalten als solche Datenpakete, die von nicht der Maschine zugeordneten weitere Mobilstationen an die Basisstation übertragen werden. Die Priorisierung von Datenpaketen kann anhand bestimmter Merkmale und Eigenschaften erfolgen. Durch die Priorisierung von Datenpaketen wird gleichzeitig die jeweilige die Datenpakete übertragende Verbindung priorisiert. Erfindungsgemäss ist nun zur Sicherstellung einer ausreichenden Bandbreite für die Übertragung von Steuer- und Überwachungsdaten vorgesehen, dass die von einer Mobilstation an die Basisstation übertragenen Datenpakete vorrangig übertragen bzw. verarbeitet werden können. Die vorrangige Bearbeitung gilt natürlich auch für solche Datenpakete, die in Zusammenhang mit der Suche nach einem alternativen Netzzugang von einer Basisstation an eine benachbarte Basisstation weitergeleitet werden. Ist beispielsweise die Mobilstation an und/oder auf einer Maschine angeordnet, so werden vorrangig Datenpakete, die eine Bandbreitenanforderung der Maschine betreffen, an die Basisstation übertragen. Datenpakete mit einer geringeren Priorität werden dagegen nicht oder nur verzögert übertragen. Ebensogut ist es möglich, dass die Übertragung von Datenpaketen mit einer geringeren Priorität unterbrochen wird, sobald Datenpakete mit einer höheren Priorität übertragen werden.

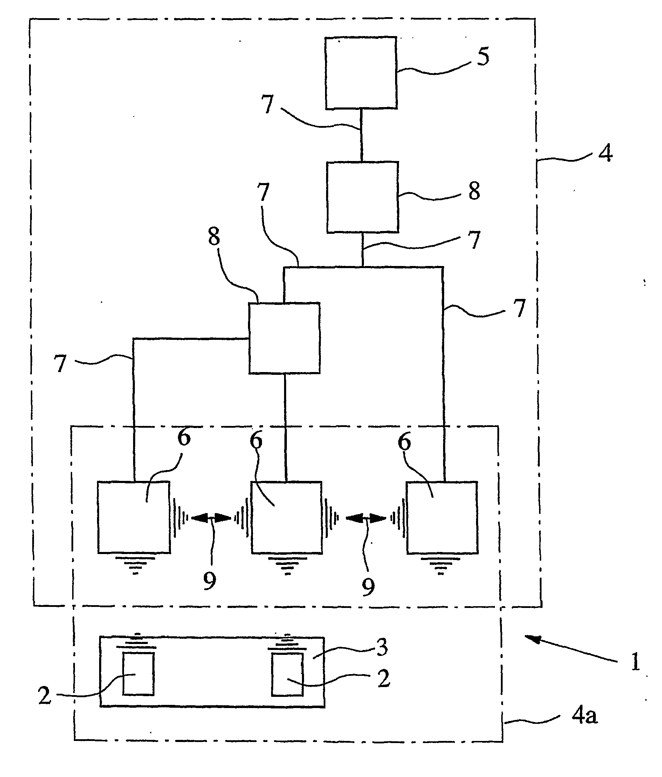

Im einzelnen gibt es Vielzahl von Möglichkeiten, das erfindungsgemässe Verfahren aus- und weiterzubilden, wobei einerseits auf die abhängigen Patentansprüche und andererseits auf die nachfolgend detaillierte Beschreibung eines bevorzugten Ausführungsbeispiels der Erfindung unter Bezugnahme auf die Zeichnung verwiesen wird. Im übrigen wird darauf hingewiesen, dass es die Erfindung bedarfsweise zulässt, die in den Ansprüchen genannten Merkmale miteinander zu kombinieren, auch wenn dies nicht im einzelnen beschrieben ist.

Die einzige Figur der Zeichnung zeigt ein System 1 zur Untertagedatenübertragung zwischen einer Mehrzahl von Mobilstationen 2 einer Untertage verfahrbaren Maschine 3 und einem stationären Netzwerk 4 über ein drahtloses lokales Funknetzwerk 4a. Bei dem Funknetzwerk 4a handelt es sich bei dem in der Zeichnung dargestellten Beispiel um ein WLAN nach IEEE 802.11-Standard. Das stationäre Netzwerk 4 weist eine stationäre Zentralstation 5 und eine Mehrzahl von als Access-Points nach IEEE 802.11-Standard ausgebildeten stationären Basisstationen 6 auf, wobei jede Basisstation 6 über wenigstens eine vorzugsweise kabelgebundene Datenübertragungsverbindung 7 mit dem stationären Netzwerk 4 verbunden ist. Die Basisstationen 6 und die Mobilstationen 2 weisen jeweils wenigstens eine Sende- und Empfangseinrichtung auf, die nicht im einzelnen dargestellt sind. Die Datenübertragung zwischen den Mobilstationen 2 und dem stationären Netzwerk 4 erfolgt in dem Funknetzwerk 4a drahtlos für wenigstens eine Basisstation 6.

Im Normalbetrieb erfolgt eine Datenübertragung zwischen einer Mobilstation 2, bei dem es sich grundsätzlich auch um ein WLAN-taugliches IP-Telefon handeln kann, und einer Zentralstation 5, beispielsweise einem Büro über Tage oder einem zentralen Leitstand, über eine stationäre Basisstation 6 und weitere Hardware-Komponenten des stationären Netzwerkes 4, insbesondere Switches 8 und/oder nicht im einzelnen dargestellte Router, Bridges oder dergleichen. Um die Infrastruktur des stationären Netzwerkes 4 in einfacher Weise an die Topologie von Untertagebauwerken anzupassen, werden die vorgenannten Komponenten vorzugsweise direkt in die Basisstationen 6 integriert. Ein Access-Point kann an einen Switch wie ein anderer Ethernet-Port angebunden sein. Damit ergibt sich aus Sicht der Kabelverlegung von Switch zu Switch eine Linienstruktur, welche logisch einer geswitchten Baumstruktur gleicht. Verfügt der Switch in den Basisstationen 6 über mehr als zwei Netzwerkanschlüsse, so lassen sich damit Leitungen in Stichtunnel abzweigen und ggf. vermaschte Netze aufbauen, welche aus Redundanzgründen grosse Vorteile haben können. Die Trennung der verschiedenen Netze erfolgt dann vorzugsweise über die Einrichtung sog. VLANs als virtuelle Local Area Networks im Switch der Basisstation.

Kommt es zu einem Stromausfall, sind alle Hardware-Komponenten des stationären Netzwerkes 4, wie beispielsweise die Basisstationen 6 und/oder die Switches 8, stromlos, was zu einer Unterbrechung der Datenübertragungsverbindung zwischen dem stationären Netzwerk und einer stromlosen Basisstation 6 führt. Das gleiche gilt für den Fall, dass ein Netzwerkkabel unterbrochen ist.

Um bei einer Unterbrechung der Datenübertragungsverbindung eine Datenübertragung zwischen einer Mobilstation 2 und dem stationären Netzwerk 4 dennoch zu ermöglichen, ist es erfindungsgemäss vorgesehen, zwischen einer von dem stationären Netzwerk getrennten Basisstation 6 und wenigstens einer weiteren über eine nicht-unterbrochene Datenübertragungsverbindung mit dem stationären Netzwerk 4 verbundenen Basisstation 6 eine direkte Datenübertragungsverbindung zwischen den benachbarten Basisstationen 6 vorzusehen. Vorzugsweise wird eine Funkverbindung 9 aufgebaut. Grundsätzlich ist es erfindungsgemäss aber auch möglich, eine Mehrzahl von Basisstationen 6 durch ein Netzwerkkabel vorzugsweise ringförmig miteinander zu verbinden, wobei bei einer Unterbrechung der Datenübertragungsverbindung 7 eine Datenübertragung zwischen der von dem stationären Netzwerk 4 getrennten Basisstation 6 und wenigstens einer weiteren über eine nicht-unterbrochene Datenübertragungsverbindung 7 mit dem stationären Netzwerk 4 verbundenen Basisstation 6 über das Netzwerkkabel erfolgt.

Eine alternative Ausführungsform der Erfindung sieht vor, dass bei einer Unterbrechung der über das stationäre Netzwerk 4 vorgesehenen Stromversorgung der Basisstation 6 eine netzunabhängige Stromversorgung erfolgt. Zu diesem Zweck ist es erfindungsgemäss vorgesehen, dass jede Basisstation 6 einen elektrischen Energiespeicher, beispielsweise eine Batterie, aufweisen kann.

Durch das kanalgebundene Übertragungsverfahren von WLAN nach IEEE 802.11 kommt es bei beweglichen Maschinen 3 im Untertagebetrieb zu Signalauslöschungen und damit zu schwankenden Kommunikationsqualitäten. Darüber hinaus wird eine Funkverbindung zwischen einer Maschine 3 und einer Basisstation 6 zum Teil durch Hindernisse unterbrochen oder beeinträchtigt.

Um die Bewegung einer Maschine 3 unter Tage zu verfolgen und eine Überwachung und Steuerung einer Maschine 3 mit hoher Sicherheit und Zuverlässigkeit ausführen zu können, ist es erfindungsgemäss weiter vorgesehen, dass eine Maschine 3 wenigstens zwei Mobilstationen 2 aufweist, die eine bedarfsweise Datenübertragung von der einen Mobilstation 2 und/oder der anderen Mobilstation 2 an eine Basisstation 6 ermöglichen. In Abhängigkeit von der Verbindungsqualität der Funkverbindungen zwischen den Mobilstationen 2 und einer Basisstation 6 kann dann vorzugsweise von der Maschine 3 eine Entscheidung darüber getroffen werden, über welche der beiden Mobilstationen 2 der Maschine 3 eine Datenübertragung an die Basisstation 6 erfolgen soll.

Alternativ wird die Datenübertragung von beiden Mobilstationen 2 der Maschine 3 gleichzeitig bzw. redundant zu verschiedenen Basisstationen 6 durchgeführt. Ebenso kann vorgesehen sein, dass von der Zentralstation 5, beispielsweise einem zentralen Server oder einer entfernten Bedieneinheit für die Maschine 3, alle Daten zur Maschine 3 über zwei unterschiedliche Routen redundant an Basisstationen 6 übertragen werden, mit denen die Maschine 3 über die Mobilstationen 3 gerade verbunden ist. Auch kann vorgesehen sein, dass lediglich das zuerst empfangene Datenpaket berücksichtigt wird, während das nachfolgend empfangene Datenpaket unberücksichtigt bleibt. In diesem Zusammenhang können die verschiedenen Alternativabläufe in Abhängigkeit vom Betriebszustand der Maschine und des Funknetzwerkes dynamisch zugeordnet und umgeschaltet werden. Dies erfolgt vorzugsweise im Dialog der mobilen und zentralen Anwendungen mit der mobilen und stationären Infrastruktur. Die Einstellungen werden in diesem Zusammenhang beeinflusst über die dynamische Konfiguration von Routern, Switches, Access-Points und mobilen Clients.

Im Zusammenhang mit der Verfolgung des Fahrweges einer Maschine 3 kann darüber hinaus vorgesehen sein, dass eine Basisstation 6 automatisch die Position einer Maschine 3 auf der Grundlage der von der Mobilstation 2 an die Basisstation 6 übertragenen Daten vorzugsweise kontinuierlich ermittelt und ein Positionssignal generiert, das von einer Basisstation 6 zu wenigstens einer benachbarten Basisstation 6 übertragen bzw. weitergeleitet wird. Dadurch wird eine benachbarte Basisstation 6 bereits vor dem Eintreffen einer Maschine 3 darüber informiert, dass sich eine Maschine 3 der benachbarten Basisstation 6 nähert und dass eine entsprechende Bandbreite für die Übertragung von Daten der Maschine 3 von der benachbarten Basisstation 6 bereitgestellt werden muss.

Das dargestellte System 1 weist vorzugsweise als Basisstationen 6 Access-Points nach 802.11-Standard auf, vorzugsweise als Kombinationsgeräte nach IEEE 802.11 a/g-Standard. Jeder Access-Point weist eine oder zwei drahtlose WLAN-Sende- und Empfangseinheiten nach IEEE 802.11-Standard auf. Darüber hinaus kann ein Access-Point mindestens einen Anschluss für ein fest verdrahtetes optisches oder kupferbasiertes Netzwerk aufweisen und gegebenenfalls einen eingebauten Switch, um Verzweigungen in der Linienstruktur eines Tunnel-Netzwerkes aufbauen zu können, und/oder eine Routing-Funktion für das Festnetz, um einen Access-Point gleichzeitig mit mehreren verschiedenen Konzentratoren, beispielsweise Switches, an das Festnetz anschliessen zu können. Jede Sende- und Empfangseinheit kann mindestens eine eingebaute Antenne bzw. ein Antennenpaar und/oder eine Anschlussmöglichkeit für mindestens eine externe Antenne aufweisen.

Darüber hinaus ist es erfindungsgemäss vorgesehen, dass ein Access-Point zur Verwendung in dem erfindungsgemässen Verfahren entsprechend ausgebildet ist. In diesem Zusammenhang kann ein Access-Point eine Funktion zur selbständigen Suche nach Festnetzverbindungen bzw. verfügbaren Verbindungen zum stationären Netzwerk im Falle eines Stromausfalles aufweisen, wobei die Suche vorzugsweise über das Funknetzwerk erfolgen kann. Zusätzlich sind Softwarefunktionen zum Ausblenden von Informationspaketen, die gleichzeitig an zwei Access-Points übermittelt worden sind, von Vorteil. Darüber hinaus können Funktionen vorgesehen sein zur Speicherung der mit einem Access-Point assoziierten Mobilgeräte, um diese permanent und/oder im Fall eines Stromausfalles an zentrale Systeme übermitteln zu können. Im übrigen sollte ein Access-Point eine Funktion zur Entgegennahme von Bandbreitenanforderungen vorzugsberechtigter Geräte und zum Blockieren und bewussten Abbrechen von Verbindungen mit geringer priorisierter Dienstgüte bei Eingang einer bevorrechtigten Bandbreitenanforderung aufweisen. Schliesslich können Routing-Funktionen zur Erleichterung der Kommunikation mit Maschinen, die mit zwei WLAN-Mobilstationen ausgerüstet sind, vorgesehen werden.

Die Konfiguration eines Access-Points kann automatisch von einem zentralen System oder manuell von einem Webbrowser ausgehend erfolgen. Im übrigen kann eine Speicherfunktion zur Speicherung von Identifikationsdaten der mit einem Access-Point assoziierten Mobilstationen für einen einstellbaren Zeitraum vorgesehen sein, um die Identifikationsdaten im Gefahrenfall an das stationäre Netzwerk 4 bzw. die Zentralstation 5 übertragen zu können. Dadurch wird sichergestellt, dass die Standorte von Personen, die im Besitz einer tragbaren Mobilstation 2 sind, nur dann von einem autorisierten Personal abrufbar sind, wenn nach einem Gefahrenereignis die Übertragung von dem autorisierten Personal angefordert worden ist. Beispielsweise sind Bewegungsbilder von Personen damit im Normalbetrieb nicht zugreifbar, sondern nur, wenn diese dem Schutz von Leib und Leben der Personen dienlich sind.

Um eine grösstmögliche Übertragungssicherheit zu gewährleisten, kann ein Access-Point mit zwei separaten Frequenzbereichen verwendet werden. Ein Frequenzbereich, beispielsweise 2,4 GHz nach IEEE 802.11 b/g-Standard, kann für den allgemeinen Netzwerkverkehr, beispielsweise Internet, Intranet, Telefonverbindungen, PDA's o.dgl., zur Verfügung stehen, wobei dieser Standard von allen gängigen WLAN-Geräten verwendet wird. Der Datenaustausch mit Maschinen 3 kann vorzugsweise nach IEEE 802.11 a-Standard im 5 GHz-Frequenzbereich vorgenommen werden. Dieser Frequenzbereich wird nur von speziellen Geräten verwendet, so dass Störungen oder Überlappungen mit anderen, weiter verbreiteten Geräten sehr unwahrscheinlich sind. Dazu weist ein Access-Point vorzugsweise zwei separate Sende- und Empfangseinrichtungen auf, die beide Kommunikationsarten unabhängig voneinander abwickeln können. 2,4 GHz und 5 GHz WLAN-Sende- und Empfangseinrichtungen können als separate Netzwerkteilnehmer an einen Switch des Access-Points angeschlossen werden. Dadurch wird zum einen eine Trennung des Datenverkehrs auf der Seite des drahtgebundenen Netzes ermöglicht, wobei die mit den Maschinen auszutauschenden Daten des 5 GHz-WLANs mit einem bestimmten externen Ethernet-Port "verdrahtet", und alle Daten des 2,4 GHz-WLANs mit einem anderen externen Ethernet-Port "verbunden" werden können. Im Ergebnis kann ein einziges Gerät für beide Kommunikationsarten verwendet werden. Die genannten Frequenzbänder treffen auf die Situation in Europa zu. Es ist selbstverständlich, dass auch andere Übertragungsnormen eingesetzt werden können und nicht aus dem Rahmen der Erfindung herausführen. Der Fachmann versteht die hier genannten Frequenzen und Normen als Beispiele kann die entsprechenden Funknetzwerke in andere Frequenzbereiche und Normen umsetzen.

Der WLAN - Access-Point kann neben seinen beschriebenen Grundfunktionen der Informationsübermittlung zwischen stationären und Mobilgeräten zudem noch weitere Funktionen übernehmen, indem Zusatzgeräte in den Access-Point eingebaut werden. Diese Zusatzgeräte übernehmen dann Funktionen der Automatisierungstechnik oder der Anwendungen. Sie werden in den Access-Point eingebaut, um z.B. die Stromversorgung oder den Schutz gegenüber Umwelteinflüssen verbessern zu können. Derartige Geräte können beispielsweise sein:
- Stationäre Navigations- und Positionierhilfen für Personal, Mobilmaschinen oder zu markscheiderischen Zwecken wie Positionssender oder Radarreflektoren.
- Stationäre Lesegeräte zur Materialidentifizierung wie z.B. Scanner, aktive und passive RFID-Leser etc.
- Rechner oder Messgeräte zur Überwachung der Luftqualität im Tunnel.

Der Access-Point als Grundkomponente des Systems zur drahtlosen Untertagedatenübertragung stellt oft bereits einen kleinen Rechner dar. Gemäss der vorliegenden Erfindung wird dabei die Rechnerkapazität der Access-Points vergrössert, so dass diese zusätzlich Funktionen im Einsatz unter Tage übernehmen können. Dies ist insbesondere deshalb wichtig, da jedes zusätzliche Gerät im harten Einsatz unter Tage eine zusätzliche Störungsquelle darstellt und dazu führen kann dass entscheidende Teil aufgrund einer solchen Störung ausfallen. Daneben ist jedes weitere Gerät durch die umfangreichen Schutzmassnahmen nur mit teuren Gehäusen zu schützen, wodurch ein zusätzlicher Kostenaufwand entsteht.

Der Access-Point kann damit selbst auch als modularer Rechner ausgeführt werden, welcher die Aufgabe des Access-Points als eine von vielen Aufgaben in der Infrastruktur eines untertägigen Bauwerkes übernimmt. Derartige Zusatzaufgaben können beispielsweise sein:
• ·Aussenden von Hilfsinformationen für die exakte Navigation und Positionierung von Fahrzeugen, Maschinen und Personal.
• ·Aufnahme und Interpretation von Informationen zur Materialverfolgung, welche z.B. durch optional angeschlossene Zusatzgeräte wie z.B. Laserscanner oder RFID-Tags eingelesen werden.
• ·Generierung und Weitergabe von Positionsierungsinformationen z.B. an übertägige Server, welche entweder über das WLAN selbst oder von optional eingebauten oder angeschlossenen Zusatzgeräten eingelesen werden.
• ·kommunikation mit Zentralsystemen nach offenen Standards der Bergbauindustrie oder in beliebigen proprietären Verfahren.
• ·Aufnahme und rechentechnische Verarbeitung von Wetterinformationen (Informationen z.B. zur Luftqualität, Temperatur, Feuchtigkeit und zur Luftströmung in der Untertageeinrichtung) zur Weitergabe an entsprechende Rechner oder zur netzwerkbasierten Steuerung der Bewetterung.
• ·Verarbeitung der Wetterinformationen und bedarfsgerechte Anforderung von Frischwettern aufgrund der Anzahl Personen und (ggf. dieselbetriebenen) Maschinen, die sich im Bereich des Access-Points aufhalten. Damit können die Bewetterungsanlagen (Ventilationsanlagen) bedarfsgerecht gesteuert werden: Energiekosten werden eingespart, da nur eine minimale Bewetterung notwendig ist, wenn sich in den entsprechenden Bereichen keine Personen aufhalten.
• ·Aufnahme, Überwachung und Weitergabe von Wasserhaltungsinformationen.
• ·Generierung von (ggf. zunächst anonymen) Informationen zur Bewegung von Personen und Überwachung der Bewegung von Personen, sodass im Notfall (wenn sich beispielsweise eine verunglückte Person über einen gewissen Zeitraum nicht bewegt hat) die Person oder eine Zentrale informiert werden kann um Kollegen im Nahbereich zu informieren.
• ·Generierung von Informationen zur "letzten bekannten Position" von Menschen unter Tage. Diese Informationen können im Notfall beispielsweise zur Einleitung von gezielten Rettungsmassnahmen dienen. Der resultierende Zeitgewinn kann im Notfall lebensrettend sein.
• ·Generierung von Informationen und Verarbeitung derselben zur Positionsbestimmung der Mobilstationen mittels Triangulation (Messung der unterschiedlichen Signalstärken) und/oder Trilateration (Signallaufzeitmessungen, TOF = Time of Flieht).

Dies umfasst die Ausführung einer Basisstation als Rechner, welcher nicht nur eine vom Hersteller des Access-Points vorgegebene Firmware, sondern auch eine für die Anwendungsprogrammierung zugängliche Programmsteuerung (Software) enthält; diese Speicher können in getrennten Steuereinrichtung oder zusammen in einer Steuereinrichtung vereinigt sein.

Diese Programmsteuerung in Verbindung mit einer Basisstation ist auch deshalb sinnvoll, da viele der vor Ort gesammelten Informationen erst in einem sachlichen und funktionalen Zusammenhang, ggf. zusammen mit Netzwerkinformationen einen anwendungstechnischen Sinn ergeben. Je näher diese Verarbeitung am Prozess selbst erfolgt, umso geringer ist die im Netzwerk benötigte Bandbreite, da ggf. auch auf zyklische Übertragungen komplett verzichtet und alternativ eine ereignisgesteuerte, vom Rechner im Access-Point ausgelöste Übertragung an programmgesteuert festgelegte Empfänger erfolgen kann.

Beispiele für Vorteile unterschiedlicher Ausführungen dieser Integration sind:
- Störungen der Ventilation z.B. verursacht durch eine vorbeifahrende Maschine können durch die gleichzeitige Verbindung des Access-Points mit der Maschine vom Rechner erkannt und als für eine Verarbeitung irrelevant ausmaskiert werden.
- Vom RFID-Leser erfasste Transporteinheiten können einem gleichzeitig mit dem Access-Point verbundenen Zug zugeordnet werden.
- Stationsabhängige Beurteilung von Bewegungsinformationen: Falls ein Bergmann ein Netzwerkgerät bei sich trägt, können Änderungen in der Feldstärke auf eine Bewegung schließen lassen. Erfolgt über einen gewissen Zeitraum keine Bewegung des Gerätes, so alarmiert der Access-Point den Träger des Gerätes (z.B. durch einen "Anruf"), den der Träger annehmen muss. Erfolgt das nicht, so alarmiert der Access-Point ein Zentralsystem um ggf. Rettungsmassnahmen einleiten zu können. Da die Informationen vor diesem Zeitpunkt nicht an ein Zentralsystem übertragen werden, lässt das System keinen datenschutzrechtlich relevanten Rückschluss auf eine "Überwachung" des Personals zu.
- Ein- und Ausschalten der Ventilation und/oder der Beleuchtung und/oder anderen Betriebsmitteln, (etc. nur wenn Personen oder Maschinen von einer Basisstation registriert werden.

Besondere Vorteile bietet diese Verarbeitung insbesondere für dezentral zu erfassende und verarbeitende Informationen, welche keinen eigenen Prozessrechner oder Datenkommunikation rechtfertigen.

Der Rechner kann im weiteren auch als Netzwerkbrücke zu weiteren Access-Points eingesetzt werden. Dabei muss der Rechner vorzugsweise mit zwei verschiedenen Wireless-LAN oder anderen Drahtlos-Interfaces bzw. Schnittstellen ausgerüstet sein. In dieser Weise kann der Rechner auch eine drahtlose "Brücke" zu weiteren entsprechenden Geräten darstellen wie bereits oben beschrieben. Damit kann der Bereich der Funkabdeckung erweitert werden, ohne dass die begleitende Infrastruktur z.B. in Form von optischem oder kupferbasiertem Netzwerkkabel verlängert werden muss. Werden derartige Geräte z.B. aus Stromgeneratoren, Brennstoffzellen oder Akkumulatoren mit Strom versorgt, so benötigt dieser Bereich nicht einmal eine Stromversorgung.

Dies ist von besonderem Interesse, da in der sich permanent ändernden Infrastruktur von Untertagebauwerken immer Bereiche existieren, in denen die entsprechende Infrastruktur (noch) nicht vorhanden ist oder nur durch extreme Kosten temporär bereitgestellt werden kann.

In diesem Fall kann die Brückenfunktion auch durch ein anderes (nicht als dedizierter Access-Point verwendetes) Gerät übernommen werden. Dann können z.B. Telefongespräche von einem IP-Telefon über eine Maschine (die ihrerseits auch ein "Client" ist) oder mehrere Maschinen als "Relaistation(en)" zum nächsten Gerät mit Anbindung an das stationäre Netzwerk geleitet werden. Dieses Verfahren ist auch als "Mesh Networks" bekannt.

In analoger Weise wie eine Netzwerkbrücke mit einem autonom stromversorgten Access-Point aufgebaut wird, können Mobilstationen auch als Netzwerkbrücke zu weiteren Geräten verändert werden. Dabei übernehmen auch mobile Geräte die Aufgabe einer Netzwerkbrücke.

Eine mit WLAN ausgerüstete Maschine kann damit als "Relaisstation" oder als "Brücke" für weitere Geräte (z.B. mit Telefon oder PDA ausgerüstete Personen) dienen, welche noch weiter von einer stationären Infrastruktur entfernt sind.

Die beschriebenen Elektronikmodule, wie beispielsweise der Rechner, können mittels einem Verfahren gemäss der vorliegenden Erfindung kalt gestartet werden. Ist ein Access-Point unter Tage im Betrieb, so stellt dieses modulare Gerät eine potentielle Fehlerquelle dar. Vereinzelt treten dabei Zustände auf, die nicht in jedem Fall reproduzierbar sind. Diese Zustände können oft durch ein einfaches Aus- und Wiedereinschalten wieder behoben werden. Ein Rückstellen oder "Reset" reicht dafür oft nicht aus, da viele Register insbesondere bei Hardwarebausteinen erst beim Abschalten der Stromversorgung vollständig gelöscht werden. Um ein Gerät unter Tage Aus- und wieder einschalten zu können, müssen oft berechtigte Personen erst lange Wegstrecken zurücklegen. Hinzu kommt, dass die Geräte oft nicht mit Ein/Ausschaltern versehen sind. Somit muss der Elektriker erst die Stromversorgung abklemmen und wieder anklemmen. Nach dem erfindungsgemässen Verfahren kann das Rechengerät mit dem Access-Point wie folgt von Ferne stromlos geschaltet werden:
1. Mindestens ein oder mehrere Elektronikmodule in dem Access-Point sind über das Netzwerk separat adressierbar.
2. Mindestens eines dieser Module erhält von einem Rechner über Tage den Befehl, das Gerät stromlos zu schalten und neu zu starten.
3. Dieses Modul löst über einen digitalen Ausgang oder über eine andere Kommunikationsschnittstelle ein Relais / Schalter oder ein elektronisches Relais in der Stromversorgung aus, welches das gesamte Gerät stromlos macht.
4. Unmittelbar nach dem Abschalten oder mit einer (ggf. einstellbaren) Zeitverzögerung gibt das (elektronische) Relais die gesamte Spannungsversorgung wieder frei und startet die einzelnen Module des Access-Points entweder gemeinsam (simultan) oder in einer fest eingestellten Abfolge.

Typischerweise befinden sich in der näheren Umgebung eines unter Tage eingesetzten Access-Points mehrere Aktoren, wie beispielweise Schalter und Ventile, welche aus der Ferne betätigt bzw. gesteuert werden. Eine verfahrensgemässe Erweiterung der Funktionalität ist damit im Einbau von robusten, galvanisch und ggf. sicherheitstechnisch ("EX") entkoppelten Ein- und Ausgängen zu sehen. Damit können digitale oder analoge Informationen direkt in das Gerät eingegeben werden oder Geräte in der näheren Umgebung des Access-Points können mit Stellbefehlen oder Sollgrössen versorgt werden.

Auch die Anbindung von (ggf. bergbauüblichen) Übertragungsschnittstellen ist möglich. Die Generierung von entsprechenden standardkonformen Datenformaten erfolgt dann direkt im Access-Point. Derartige Schnittstellen sind beispielsweise serielle Kopplungen nach dem deutschen Bergbaubetriebsblatt oder Ethernet basierte Standards z.B. auf der Basis von XML.

Die direkte Anbindung von Sensor- und Aktorsignalen kann auch auf die Anbindung von drahtloser Sensorik und Aktorik ausgedehnt werden. Damit stellt der Access-Point den Zugang zur stationären Infrastruktur dar für drahtlose Sensornetzwerke mit denen Informationen aller Art (z.B. über Temperaturen, Feuchtigkeiten, Drücke, etc) aus dem Untertageprozess für die Prozessführung eingelesen werden sollen. Ein solches Sensornetzwerk kann in einer Gestalt ausgeführt sein, dass die Informationen von weiter vom Access-Point entfernten Sensoren über näher am Access-Point liegende geführt werden, wodurch das gesamte unverdrahtete Sensornetz Zugang zur Infrastruktur erhält.

Alternativ zu beschriebenen Ausführungsbeispielen, welches redundante Verbindungen verwendet, kann auch ein Verfahren gemäss der vorliegenden Erfindung mit der Bezeichnung Roaming eingesetzt werden.

Um die Übertragungssicherheit und die Verfügbarkeit zusätzlich zu erhöhen, weist ein weiteres Ausführungsbeispiel gemäss der vorliegenden Erfindung die Funktion eines automatischen Weiterreichens oder Roaming auf. Dabei wird ein sich bewegendes mobiles Gerät von einem stationären Access-Point eines Netzwerkes zu einem nächstliegenden Access-Point des Netzwerkes weitergereicht. Vorzugsweise ist das Netzwerk ein WLAN. Durch diese Weiterleitung kann die Verbindung zwischen dem mobilen Gerät und dem Netzwerk bzw. dessen Access-Points möglichst konstant aufrechterhalten werden.

Das beschriebene Roaming wird mit einem erfindungsgemässen Verfahren erreicht.

Bekannterweise hält ein Mobilteil solange an einer Verbindung zu einem Access-Point fest, bis diese abbricht. Darauf hin startet das Mobilteil eine Suche nach alternativen Access-Points um eine neue Verbindung zu erstellen. Dabei werden alle zur Verfügung stehenden Kanäle abgetastet oder gescannt. Die beste für das jeweilige freigegebene Verbindung wird dann ausgewählt. Diese Verbindung wird dann aktiviert und es können Daten zwischen dem Mobilteil und dem Netzwerk über den Access-Point ausgetauscht werden. Diese Verfahrensweise nimmt jedoch einen Zeitraum in Anspruch der insbesonders für den Einsatz auf Mobilmaschinen zu hoch ist. Zudem kann während dem Suchvorgang kein Datenaustausch erfolgen.

Das Verfahren gemäss der vorliegenden Erfindung umfasst dabei die folgenden Schritte:
1. Schritt des Erfassens: Kontinuierliches Erfassen mindestens eines Parameters für die Qualität des Empfangssignals zwischen dem Mobilteil und dem Access-Point. Die Signalqualität wird mit I_{AKTUELL} bezeichnet. Wird dabei ein bestimmter und durch den Benutzer einstellbarer Schwellwert Iₛ unterschritten, wird der zweite Schritt des Verfahrens eingeleitet.
2. Schritt des Suchens: Nach dem Unterschreiten des Schwellwertes beginnt der Schritt des Suchens eines neuen Access-Points. Der Schritt des Suchens läuft dabei simultan zur Datenübertragung ab oder er unterbricht die Datenübertragung kurzfristig für einen sehr kurzen Zeitraum.
3. Schritt des Erfassens: Erfassen der Signalqualität des gefundenen Access-Points, welche mit I_{NEU} bezeichnet wird.
4. Schritt des Vergleichens: Vergleichen von I_{AKTUELL} und I_{LMU}. Wenn die Signalqualität des gefundenen Access-Points besser ist als die Signalqualität des aktuellen Access-Points, also I_{AKTUELL} < I_{NEU} wird der Schritt 5 eingeleitet.
5. Schritt des Umschaltens: Umschalten des Mobilteils von einem aktuellen Kanal, also vom aktuellen Access-Point zu einem neuen Kanal, also einem Access-Point.

Der Schwellwert I_{S} ist dabei so eingestellt, dass die Verbindung beim Erreichen des Schwellwertes immer noch stabil gehalten werden kann.

Zur Ermittlung der Signalqualität können unterschiedliche Verfahren verwendet werden, z.B. die Feldstärke des Signals, Anzahl der in einem definierten Zeitraum erwarteten und tatsächlich erhaltenen Lebenszeichen ("Heartbeat", "Beacons", o.ä.) von einer Basisstation ("Lost Beacon Rate"), der Signal-Rauschabstand oder die Paketfehlerrate.

Der Schritt des Suchens kann in die Datenübertragung integriert werden. Somit kann der Schritt des Suchens effizienter durchgeführt werden. Dieser Schritt kann per Konfiguration eingeschränkt werden auf diejenigen Kanäle, die vom Netzwerk verwendet werden. Da üblicherweise nur wenige Kanäle (z.B. drei von 13) verwendet werden, beschleunigt sich damit der gesamte Suchvorgang.

Um den Schritt des Suchens weiterhin zu beschleunigen, insbesondere wenn der Suchvorgang die Datenübertragung unterbrechen muss, kann der Suchvorgang in Einzelschritten durchgeführt werden, wobei zwischen jedem Einzelschritt wiederum eine Datenübertragung erfolgen kann. Also z.B.: DATENAUSTAUSCH --> Suche auf Kanal 3 --> DATENAUSTAUSCH --> suche auf Kanal 11 --> DATENAUSTAUSCH.

Ein alternatives Roaming-Verfahren ist ein erfindungsgemässes Verfahren zum ortsabhängigen Roaming. Dieses Verfahren kann insbesondere dann eingesetzt werden, wenn die Maschinen in bekannten Einsatzbereichen bzw. Grubengebäuden eingesetzt werden. In diesem Verfahren werden keine Schritte des Suchens durchgeführt, das heisst auf Suchroutinen wird verzichtet.

In einem ersten Schritt muss dabei der Einsatzbereich vor dem Einsatz der automatisierten Maschine ausgemessen werden. Dabei werden vorzugsweise die Position und die an der Position herrschende Intensität bzw. Feldstärke der zugehörigen Kanäle und Access-Points erfasst. Mit diesen Daten kann dann eine Feldstärkenkarte des ausgemessen Einsatzbereiches erstellt werden. Die Vermessung kann sowohl mit der einzusetzenden Maschine als auch mit einem anderen Fahrzeug erfolgen. Die Feldstärkenkarte kann beispielsweise in Form einer Tabelle abgespeichert werden. Wobei die Tabelle dann zu jeder Position entsprechende Informationen zu den Access-Points zugewiesen hat. Beispielsweise ist die Position erfasst, an der eine Kanal- oder Access-Point-Umschaltung vorzunehmen ist sowie die Identifizierung des Access-Points, auf welchen die Verbindung umzuschalten ist.

Die Feldstärkenkarte beinhaltet also Informationen über die zu erwartenden Empfangsbedingungen eines Mobilteils an bestimmten Positionen in einem Einsatzbereich. Diese Feldstärkenkarte wird einer Steuereinheit der Maschine vor einer Automatikfahrt in elektronischer Form übermittelt.

Mittels einer geeigneten Messvorrichtung, einer Einrichtung zur jeweiligen Positionsbestimmung, wird die Position der Maschine laufend überprüft. Die gemessene Position wird laufend mit der Feldstärkenkarte verglichen. Erreicht nun die Maschine eine Position, an welcher eine Kanal- oder Access-Point-Umschaltung vorzunehmen ist, wird dies durch die Maschinensteuerung erfasst und die Umschaltung wird vollzogen. Diese Umschaltung erfolgt in schneller Weise und führt deshalb zu einem kaum wahrnehmbaren Roaming.

Die besagte Feldstärkenkarte bildet einen Aspekt einer gespeicherten Tabelle, wobei diesen Orten und Feldstärken jeweils direkt (pro Position der Mobilstation) oder indirekt (Berechnung der Feldstärke am Ort der Mobilstation über die Position der Basisstation) eine oder mehrere bevorzugte Basisstationen zugeordnet sind.

Beide beschriebenen Roaming-Verfahren können sowohl allein als auch gemeinsam und insbesondere in Kombination mit dem redundanten Kommunikationsverfahren eingesetzt werden.

Eine weitere alternative Möglichkeit zur Betreibung von Funkanlagen unter Tage ist die Nutzung der MIMO-Technologie nach dem kommenden Standard IEEE 802.11n. MIMO bezeichnet dabei eine Übertragungssystem mit mehrfachen Aufnahmen und mehrfachen Ausgaben (Multiple Input - Multiple Output). Dabei können unter Tage auftretende Interferenzen verringert werden. Interferenzen entstehen durch die Mehrfachausbreitung von Funkwellen durch die an den Tunnelwänden auftretenden Reflektionen.

Bei dieser Alternative werden n mehrere unterschiedlich ausgerichtete Antennen an einem Sende- und Empfangsbaustein (Transceiver) verwendet. Damit wird das Empfangssignal mehrfach aufgenommen ("Multiple Input") und das Sendesignal wird mehrfach abgegeben ("Multiple Output").

Im Untertageeinsatz verringert diese Technologie die an den Tunnelwänden permanent entstehenden Reflektionen und stellt damit ein wesentliches technisches Mittel für die Erzielung guter Verbindungsqualitäten mit hohen Reichweiten dar.

Das erfindungsgemässe Verfahren sieht vor, dass die MIMO - Technologie im Access-Point und / oder im Mobilteil eingesetzt werden kann. Dies gilt insbesondere mit Richtantennen, die für den Untertageeinsatz speziell optimiert wurden.

MIMO im Untertageeinsatz kann dabei auch gleichzeitig mit mehreren verschiedenen Transceivern im Zusammenhang mit der Übertragungsredundanz zum Einsatz kommen.

In Verbindung mit den oben dargestellten Verfahren des Roamings und der Übertragungsredundanz wird damit der Untertageeinsatz von drahtlosen Netzwerken weiter optimiert.

## Patentansprüche

1. Verfahren zur drahtlosen Untertagedatenübertragung zwischen wenigstens einer Mobilstation (2) und einem stationären Netzwerk (4) über ein Funknetzwerk (4a), vorzugsweise über ein WLAN nach IEEE 802.11-Standard, insbesondere zur Überwachung und zur Steuerung von Untertage verfahrbaren Maschinen (3), wobei das stationäre Netzwerk (4) eine Mehrzahl von vorzugsweise als Access-Points ausgebildete stationäre Basisstationen (6) aufweist, wobei jede Basisstation (6) über wenigstens eine vorzugsweise kabelgebundene Datenübertragungsverbindung (7) mit dem stationären Netzwerk (4) verbunden ist, wobei jede Basisstation (6) und die Mobilstation (2) jeweils wenigstens eine Sende- und Empfangseinrichtung aufweisen und wobei die Datenübertragung zwischen der Mobilstation (2) und dem stationären Netzwerk (4) in dem Funknetzwerk (4a) drahtlos über wenigstens eine Basisstation (6) erfolgt, **dadurch gekennzeichnet, dass** bei einer Unterbrechung der Stromversorgung der Basisstation (6) eine netzunabhängige Stromversorgung erfolgt, und dass unmittelbar nach einer Unterbrechung der Stromversorgung einer Basisstation (6) in einem Notfallmodus Identifikationsdaten und/oder Positionsdaten wenigstens einer sich vor und/oder nach der Unterbrechung der Stromversorgung innerhalb der Funkreichweite der Basisstation (6) befindlichen Mobilstation (2), vorzugsweise aller innerhalb der Funkreichweite angeordneten Mobilstationen (2), ermittelt und von der Basisstation (6) an das stationäre Netzwerk (4) übertragen werden.

2. Verfahren nach Anspruch 1, **dadurch gekennzeichnet, dass** in dem Notfallmodus nach der Übertragung der Identifikationsdaten und/oder Positionsdaten der Basisstation (6) die weitere Datenübertragung lediglich eingeschränkt zugelassen wird und/oder dass Identifikationsdaten und/oder Positionsdaten zyklisch ermittelt und an das stationäre Netzwerk (4) übertragen werden, und/oder dass Identifikationsdaten und/oder Positionsdaten über einen festgelegten Zeitraum gespeichert und kontinuierlich oder lediglich nach einer Unterbrechung der Stromversorgung übertragen werden.

3. Verfahren nach einem der vorstehenden Ansprüche, **dadurch gekennzeichnet, dass** einer oder mehrere Parameter der Signalqualität der zwischen wenigstens einer Mobilstation und wenigstens einer Basisstation übertragenen Daten ereignisabhängig oder in vorgegebenen oder dynamischen Zeitabständen überwacht wird, und dass diese Signalqualität einerseits zur Positionsbestimmung der Mobilstation (2) verwendet wird, vorzugsweise über einen Vergleich mit einem Referenzsignalwert, und/oder andererseits eine Änderung der Signalqualität zur Bestimmung der Bewegungsrichtung einer bewegten Mobilstation (2) verwendet wird.

4. Verfahren nach einem der vorstehenden Ansprüche, **dadurch gekennzeichnet, dass** die Mobilstation (2) über eine Einrichtung zur jeweiligen Positionsbestimmung und über eine gespeicherte Tabelle verfügt, in der für die besagten einnehmbaren und feststellbaren Positionen Informationen über die jeweilig bevorzugten Basisstationen (6) abgelegt sind, so dass die Auswahl der jeweils zu verbindenden Basisstationen (6) in Abhängigkeit von der jeweiligen Position vorgenommen werden kann.

5. Verfahren nach einem der vorhergehenden Ansprüche, **dadurch gekennzeichnet, dass** wenigstens zwei, vorzugsweise alle Basisstationen (6), über eine vorzugsweise mit dem stationären Netzwerk (4) verbundene Datenübertragungsleitung miteinander verbunden werden, insbesondere ringförmig, und dass die Datenübertragung zwischen einer getrennten Basisstation (6) und einer mit dem stationären Netzwerk (4) verbundenen Basisstation (6) über die Datenübertragungsleitung kabelgebunden erfolgt.

6. Verfahren nach einem der vorstehenden Ansprüche, **dadurch gekennzeichnet, dass** bei einer Unterbrechung der Datenübertragungsverbindung (7) zwischen dem stationären Netzwerk (4) und einer Basisstation (6) und/oder bei Unterbrechung der Funkverbindung zwischen der Mobilstation (2) und der Basisstation (6) eine Datenübertragung zwischen der Mobilstation (2) und dem stationären Netzwerk (4) über die getrennte Basisstation (6) und wenigstens eine weitere über eine nicht-unterbrochene Datenübertragungsverbindung (7) mit dem stationären Netzwerk (4) verbundene Basisstation (6) erfolgt.

7. Verfahren nach einem der vorhergehenden Ansprüche, **dadurch gekennzeichnet, dass** mit der Mobilstation (2) die Qualität des Empfangssignals der in Verbindung mit der Mobilstation (2) stehenden Basisstation (6) kontinuierlich erfassbar ist und bei Unterschreiten eines vorbestimmbaren Schwellwertes in einem nachgeordneten Suchschritt die Qualität der Empfangssignale der nicht in Verbindung mit der Mobilstation (2) stehenden Basisstationen (6) und anschliessend die Mobilstation (2) auf die Basisstation (6) mit der höchsten Qualität umschaltet, und/oder ob eine redundante Datenverbindung genutzt wird oder nicht.

8. Verfahren nach einem der vorhergehenden Ansprüche, **dadurch gekennzeichnet, dass** die Basisstation über zwei eigenständige Netzwerkverbindungen erreichbar ist und das gesamte Gerät über ein entsprechendes Kommando eines entfernten Rechners über eine der besagten Netzwerkverbindungen mit Hilfe einer Kaltstartelektronik zu einem Abschalten und Wiedereinschalten des ganzen Gerätes aus- und einschaltbar ist.

9. System zur drahtlosen Untertagedatenübertragung zwischen wenigstens einer Mobilstation (2) und einem stationären Netzwerk (4) über ein Funknetzwerk (4a), vorzugsweise über ein WLAN nach IEEE 802.11-Standard, wobei das stationäre Netzwerk (4) eine Mehrzahl von vorzugsweise als Access-Points ausgebildete stationäre Basisstationen (6) aufweist, wobei jede Basisstation (6) über wenigstens eine vorzugsweise kabelgebundene Datenübertragungsverbindung (7) mit dem stationären Netzwerk (4) verbunden ist oder direkt an ein Lichtwellenleiternetzwerk angeschlossen ist, wobei jede Basisstation (6) und die Mobilstation (2) jeweils wenigstens eine Sende- und Empfangseinrichtung aufweisen und wobei die Datenübertragung zwischen der Mobilstation (2) und dem stationären Netzwerk (4) in dem Funknetzwerk (4a) drahtlos über wenigstens eine Basisstation (6) erfolgt, zur Durchführung eines Verfahrens nach einem der Ansprüche 1 bis 7, **dadurch gekennzeichnet**, die Basisstation (6) eine netzunabhängige Stromversorgung aufweist, die bei einer Unterbrechung der Stromversorgung der Basisstation (6) einsetzbar ist, und dass die Basisstation (6) unmittelbar nach einer Unterbrechung der Stromversorgung dieser Basisstation (6) in einen Notfallmodus schaltbar ist, in dem Identifikationsdaten und/oder Positionsdaten wenigstens einer sich vor und/oder nach der Unterbrechung der Stromversorgung innerhalb der Funkreichweite der Basisstation (6) befindlichen Mobilstation (2), vorzugsweise aller innerhalb der Funkreichweite angeordneten Mobilstationen (2), ermittelbar und von der Basisstation (6) an das stationäre Netzwerk (4) übertragbar sind.

## Claims

1. A method for subterranean wireless data transmission between at least one mobile station (2) and a fixed network (4) by means of a radio network (4a), preferably using a WLAN with the IEEE 802.11 standard, particularly for monitoring and controlling subterranean moving machines (3), wherein the fixed network (4) comprises a number of fixed base stations (6) preferably embodied as access points, each base station (6) being connected to the fixed network (4) by means of at least one data transmission connection (7), preferably by a cable, wherein each base station (6) and the mobile station (2) in each case comprise at least one transceiver device and the data transmission between the mobile station (2) and the fixed network (4) is effected wirelessly in the radio network (4a) via at least one base station (6), **characterized in that** in the case of an interruption of the power supply to the base station (6), a network-independent power supply is provided, and **in that** immediately after an interruption of the power supply to a base station (6) in an emergency mode, identification data and/or position data of at least one mobile station (2) located within radio range of the base station (6) before and/or after the interruption of the power supply, preferably of all mobile stations (2) arranged within radio range, are determined and transmitted to the fixed network (4) by the base station (6).

2. The method as claimed in claim 1, **characterized in that** in the emergency mode, after the transmission of the identification data and/or position data of the base station (6), further data transmission is allowed only to a restricted extent and/or **in that** identification data and/or position data are determined, and transmitted to the fixed network (4), cyclically and/or **in that** identification data and/or position data are stored over a predetermined period of time and are transmitted continuously or only after an interruption of the power supply.

3. The method as claimed in one of the preceding claims, **characterized in that** one or more parameters of the signal quality of the data transmitted between at least one mobile station and at least one base station is monitored in dependence on events or in predetermined or dynamic time intervals, and **in that** said signal quality is used for determining the position of the mobile station (2), on the one hand, preferably via a comparison with a reference signal value, and/or a change in the signal quality is used for determining the direction of movement of a moving mobile station (2), on the other hand.

4. The method as claimed in one of the preceding claims, **characterized in that** the mobile station (2) has a device for the respective position determination and a stored table in which information on the base stations (6) preferred in each case is stored for the said positions which can be assumed and determined, so that the base stations (6) to be connected in each case can be selected in dependence on the respective position.

5. The method as claimed in one of the preceding claims, **characterized in that** at least two, preferably all base stations (6) are connected to one another via a data transmission line preferably connected to the fixed network (4), especially in the form of a ring, and **in that** the data transmission between a separate base station (6) and a base station (6) connected to the fixed network (4) takes place by cable via the data transmission line.

6. The method as claimed in one of the preceding claims, **characterized in that** during an interruption of the data transmission connection (7) between the fixed network (4) and a base station (6) and/or an interruption of the radio link between the mobile station (2) and the base station (6), a data transmission between the mobile station (2) and the fixed network (4) is effected via the separate base station (6) and at least one further base station (6) connected to the fixed network (4) by means of an uninterrupted data transmission connection (7).

7. The method as claimed in one of the preceding claims, **characterized in that** the mobile station (2) continuously detects the quality of the received signal of the base station (6) connected to the mobile station (2) and, when it drops below a predeterminable threshold value, in a subsequent search step, the quality of the received signals of the base stations (6) not connected to the mobile station (2), and subsequently switches the mobile station (2) to the base station (6) having the highest quality, and/or whether a redundant data link is used or not.

8. The method as claimed in one of the preceding claims, **characterized in that** the base station can be reached via two independent network connections and the entire device can be switched off and on via a corresponding command of a remote computer via one of the said network connections with the aid of cold-start electronics for switching the entire device off and on again.

9. A system for subterranean wireless data transmission between at least one mobile station (2) and a fixed network (4) by means of a radio network (4a), preferably using a WLAN with the IEEE 802.11 standard, wherein the fixed network (4) comprises a number of fixed base stations (6) preferably embodied as access points, each base station (6) being connected to the fixed network (4) by means of at least one data transmission connection (7), preferably by a cable, or directly to an optical waveguide network, wherein each base station (6) and the mobile station (2) in each case comprise at least one transceiver device and the data transmission between the mobile station (2) and the fixed network (4) is effected wirelessly in the radio network (4a) via at least one base station (6), for carrying out a method as claimed in one of claims 1 to 7, **characterized in that** the base station (6) comprises a network-independent power supply, adapted to be used in the case of an interruption of the power supply to the base station (6), and **in that** the base station (6) is adapted to be switched into an emergency mode immediately after an interruption of the power supply to said base station (6), within which identification data and/or position data of at least one mobile station (2) located within radio range of the base station (6) before and/or after the interruption of the power supply, preferably of all mobile stations (2) arranged within radio range, are determined and transmitted to the fixed network (4) by the base station (6).

## Revendications

1. Procédé de transmission sans fil de données souterraines entre au moins une station mobile (2) et un réseau fixe (4) par le biais d'un réseau de radiocommunication (4a), de préférence par le biais d'un WLAN selon la norme IEEE 802.11, notamment pour la surveillance et la commande de machines mobiles souterraines (3), le réseau fixe (4) présentant une pluralité de stations de base fixes (6) réalisées de préférence sous la forme de points d'accès, chaque station de base (6) étant reliée avec le réseau fixe (4) par le biais d'au moins une liaison de transmission de données (7) de préférence filaire, chaque station de base (6) et la station mobile (2) présentant respectivement au moins un dispositif d'émission et de réception et la transmission de données entre la station mobile (2) et le réseau fixe (4) dans le réseau de radiocommunication (4a) s'effectuant sans fil par le biais d'au moins une station de base (6), **caractérisé en ce qu'**en cas d'interruption de l'alimentation électrique de la station de base (6), il se produit une alimentation électrique indépendante du réseau et qu'immédiatement après une interruption de l'alimentation électrique d'une station de base (6), dans un mode de secours, les données d'identification et/ou les données de position d'au moins une station mobile (2) qui se trouve à l'intérieur de la zone de portée radioélectrique de la station de base (6) avant et/ou après l'interruption de l'alimentation électrique, de préférence de toutes les stations mobiles (2) qui se trouvent à l'intérieur de la zone de portée radioélectrique, sont déterminées puis transmises de la station de base (6) au réseau fixe (4) .

2. Procédé selon la revendication 1, **caractérisé en ce que** dans le mode de secours, après la transmission des données d'identification et/ou des données de position à la station de base (6), la poursuite de la transmission de données n'est autorisée que de manière restreinte et/ou que les données d'identification et/ou les données de position sont déterminées et transmises au réseau fixe (4) de manière cyclique et/ou que les données d'identification et/ou les données de position sont enregistrées pendant une période fixe et transmises continuellement ou seulement après une interruption de l'alimentation électrique.

3. Procédé selon l'une des revendications précédentes, **caractérisé en ce qu'**un ou plusieurs paramètres de la qualité du signal des données transmises entre au moins une station mobile et au moins une station de base sont surveillés en fonction des événements ou encore à des intervalles de temps prédéfinis ou dynamiques et **en ce que** d'une part cette qualité du signal est utilisée pour déterminer la position de la station mobile (2), de préférence par le biais d'une comparaison avec une valeur de signal de référence, et/ou que d'autre part une modification de la qualité du signal est utilisée pour déterminer le sens de déplacement d'une station mobile (2) qui se déplace.

4. Procédé selon l'une des revendications précédentes, **caractérisé en ce que** la station mobile (2) dispose d'un dispositif de détermination de la position correspondante et d'un tableau mémorisé dans lequel sont stockées des informations sur les stations de base (6) à chaque fois préférentielles pour lesdites positions pouvant être adoptées et pouvant être fixées, de sorte que la sélection des stations de base (6) respectivement à connecter peut être effectuée en fonction de la position correspondante.

5. Procédé selon l'une des revendications précédentes, **caractérisé en ce qu'**au moins deux, de préférence toutes les stations de base (6), sont connectées entre elles par le biais d'une ligne de transmission de données de préférence reliée avec le réseau fixe (4), notamment à la manière d'un anneau, et que la transmission de données entre une station de base (6) isolée et une station de base (6) connectée au réseau fixe (4) s'effectue par le biais de la ligne de transmission de données.

6. Procédé selon l'une des revendications précédentes, **caractérisé en ce qu'**en cas d'interruption de la liaison de transmission de données (7) entre le réseau fixe (4) et une station de base (6) et/ou en cas d'interruption de la liaison de radiocommunication entre la station mobile (2) et la station de base (6), il se produit une transmission de données entre la station mobile (2) et le réseau fixe (4) par le biais de la station de base isolée (6) et au moins une station de base (6) supplémentaire connectée avec le réseau fixe (4) par le biais d'une liaison de transmission de données (7) non interrompue.

7. Procédé selon l'une des revendications précédentes, **caractérisé en ce que** la qualité du signal reçu de la station de base (6) qui est en liaison avec la station mobile (2) peut être détectée continuellement avec la station mobile (2) et si celle-ci devient inférieure à une valeur de seuil prédéfinie, une étape suivante consiste à déterminer la qualité des signaux reçus des stations de base (6) qui ne sont pas en liaison avec la station mobile (2) et la station mobile (2) permute ensuite sur la station de base (6) ayant la qualité la plus élevée, et/ou si une liaison de données redondante est utilisée ou non.

8. Procédé selon l'une des revendications précédentes, **caractérisé en ce que** la station de base peut être contactée par le biais de deux liaisons de réseau autonomes et l'appareil dans son ensemble peut être arrêté et mis en marche par le biais d'une commande correspondante d'un ordinateur distant par le biais desdites liaisons de réseau à l'aide d'un circuit électronique de démarrage à froid pour effectuer un arrêt et une remise en marche de l'ensemble de l'appareil.

9. Système de transmission sans fil de données souterraines entre au moins une station mobile (2) et un réseau fixe (4) par le biais d'un réseau de radiocommunication (4a), de préférence par le biais d'un WLAN selon la norme IEEE 802.11, le réseau fixe (4) présentant une pluralité de stations de base fixes (6) réalisées de préférence sous la forme de points d'accès, chaque station de base (6) étant reliée avec le réseau fixe (4) par le biais d'au moins une liaison de transmission de données (7) de préférence filaire ou étant raccordée directement à un réseau de fibres optiques, chaque station de base (6) et la station mobile (2) présentant respectivement au moins un dispositif d'émission et de réception et la transmission de données entre la station mobile (2) et le réseau fixe (4) dans le réseau de radiocommunication (4a) s'effectuant sans fil par le biais d'au moins une station de base (6), destiné à mettre en oeuvre un procédé selon l'une des revendications 1 à 7 , **caractérisé en ce que** la station de base (6) présente une alimentation électrique indépendante du réseau qui est utilisable en cas d'interruption de l'alimentation électrique de la station de base (6), et que la station de base (6), immédiatement après une interruption de l'alimentation électrique de ladite station de base (6), peut être commutée en un mode de secours dans lequel les données d'identification et/ou les données de position d'au moins une station mobile (2) qui se trouve à l'intérieur de la zone de portée radioélectrique de la station de base (6) avant et/ou après l'interruption de l'alimentation électrique, de préférence de toutes les stations mobiles (2) qui se trouvent à l'intérieur de la zone de portée radioélectrique, peuvent être déterminées et peuvent être transmises de la station de base (6) au réseau fixe (4).
